(19) Europäisches Patentamt
European Patent Office
Office européen des brevets

(11) **EP 4 608 037 A1**

(12) **EUROPEAN PATENT APPLICATION**
published in accordance with Art. 153(4) EPC

(43) Date of publication:
**27.08.2025 Bulletin 2025/35**

(21) Application number: **24744075.3**

(22) Date of filing: **03.01.2024**

(51) International Patent Classification (IPC):
**H04W 72/12** (2023.01)

(52) Cooperative Patent Classification (CPC):
**H04W 4/70; H04W 72/0453; H04W 72/12**

(86) International application number:
**PCT/CN2024/070294**

(87) International publication number:
**WO 2024/152899 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.01.2023 CN 202310202767
27.02.2023 CN 202310217499**

(71) Applicant: **Huawei Technologies Co., Ltd.
Shenzhen, Guangdong 518129 (CN)**

(72) Inventors:
- **WU, Yue
  Shenzhen, Guangdong 518129 (CN)**
- **LI, Xueru
  Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND APPARATUS**

(57) This application relates to a communication method and apparatus. A first terminal device sends sidelink control information, where the sidelink control information includes first information, the first information indicates a starting frequency domain location of a first sidelink shared channel, and the first sidelink shared channel is scheduled by using the sidelink control information. The first information may indicate the starting frequency domain location of the first sidelink shared channel. Therefore, a starting frequency domain location of a first sidelink control channel may be the same as or different from the start frequency domain location of the first sidelink shared channel, so that distribution of the first sidelink control channel is more flexible. For example, the first sidelink control channel may occupy a subchannel with low interference, to reduce poor adjacent-band link interference on a receiver of the first sidelink control channel when the receiver receives the first sidelink control channel, and improve transmission performance of the sidelink control channel.

```
┌──────────┐                              ┌───────────┐
│ First UE │                              │ Second UE │
└──────────┘                              └───────────┘
     │  S401: SCI (including first information,   │
     │  where the first information indicates a   │
     │  starting frequency domain location of a   │
     │            first PSSCH)                     │
     │───────────────────────────────────────────>│
```

FIG. 4

EP 4 608 037 A1

**Description**

CROSS-REFERENCE TO RELATED APPLICATIONS

This application claims priorities to Chinese Patent Application No. 202310202767.1, filed with the China National Intellectual Property Administration on January 16, 2023 and entitled "SIDELINK COMMUNICATION METHOD AND DEVICE", and to Chinese Patent Application No. 202310217499.0, filed with the China National Intellectual Property Administration on February 27, 2023 and entitled "COMMUNICATION METHOD AND APPARATUS", both of which are incorporated herein by reference in their entireties.

TECHNICAL FIELD

This application relates to the field of communication technologies, and in particular, to a communication method and apparatus.

BACKGROUND

In a multi-user scenario, a user equipment (user equipment, UE) may face, in a receiving process of a sidelink (sidelink, SL), adjacent-channel interference generated in a sending process of another UE.

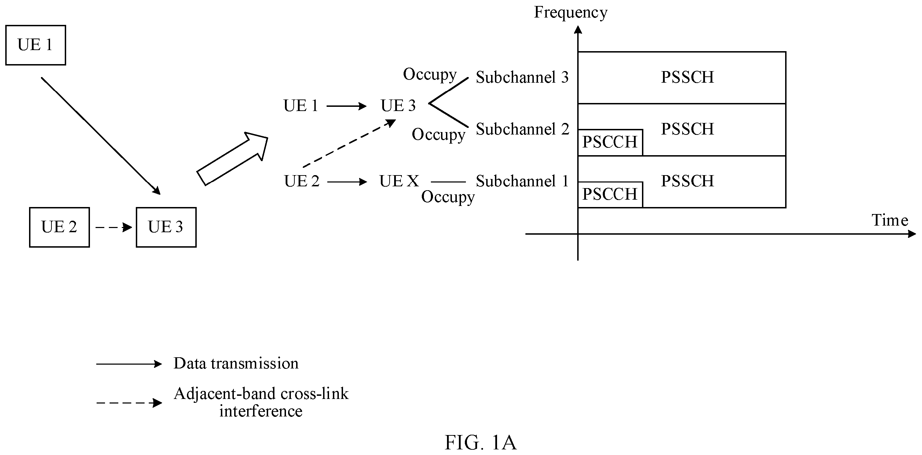

FIG. 1A is a diagram of a receiving and sending process of three UEs. A UE 1 and a UE 2 occupy adjacent subchannels in a same slot in a frequency division multiplexing (frequency division multiplexing, FDM) manner to send a physical sidelink control channel (physical sidelink control channel, PSCCHs)/physical sidelink shared channel (physical sidelink shared channel, PSSCH). The UE 1 occupies a subchannel 2 and a subchannel 3 to send a PSCCH/PSSCH, and the UE 2 occupies a subchannel 1 to send a PSCCH/PSSCH to a UE X. The subchannels 1, 2, and 3 are three consecutive subchannels in frequency domain, and a frequency domain location relationship among the subchannels 1, 2, and 3 is shown in FIG. 1A.

In practice, considering a non-ideal feature of a transmitter power amplifier (power amplifier, PA), power of sending a PSCCH/PSSCH by a UE may leak to an adjacent frequency band. Consequently, adjacent-band cross-link interference exists between UEs. For example, in FIG. 1A, a UE 3 is a receiving UE of the UE 1, and the UE 3 receives the PSCCH/PSSCH from the UE on the subchannel 2 and the subchannel 3. Because the UE 2 performs a sending process on the subchannel 1 in the same slot, when the UE 3 receives the PSCCH/PSSCH from the UE 1, adjacent-band cross-link interference from the UE 2 is caused to the UE 3. Currently, a starting frequency domain location of the PSCCH is the same as that of the PSSCH; and the PSSCH may occupy one or more subchannels, but the PSCCH occupies only one subchannel. In this case, because the UE 1 occupies the subchannel 2 and the subchannel 3 for sending, the PSSCH is distributed on the subchannel 2 and the subchannel 3, but the PSCCH is distributed only on the subchannel 2; and because the UE 2 occupies the subchannel 1 for sending, both the PSSCH and the PSCCH are distributed on the subchannel 1. The sending process of the UE 2 on the subchannel 1 causes high adjacent-band cross-link interference to a receiving process of the UE 3 on the subchannel 2, severely affecting transmission performance of the PSCCH.

SUMMARY

Embodiments of this application provide a communication method and apparatus, to improve a success rate of receiving a PSCCH by a terminal device.

According to a first aspect, a first communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The terminal device is, for example, a first terminal device. The method includes: sending sidelink control information, where the sidelink control information includes first information, the first information indicates a starting frequency domain location of a first sidelink shared channel, and the first sidelink shared channel is scheduled by using the sidelink control information.

In this embodiment of this application, the first information may indicate the starting frequency domain location of the first sidelink shared channel. In other words, a receiver may determine the starting frequency domain location of the first sidelink shared channel based on the first information. Therefore, a starting frequency domain location of a first sidelink control channel may be the same as or different from the start frequency domain location of the first sidelink shared channel, so that distribution of the first sidelink control channel is more flexible. For example, the first sidelink control channel may occupy a subchannel with low interference, to reduce poor adjacent-band link interference on a receiver of the first sidelink control channel when the receiver receives the first sidelink control channel, and improve transmission performance of the sidelink control channel.

In an optional implementation, the sidelink control information includes a frequency resource assignment field, and the first information is the frequency resource assignment field. The frequency resource assignment field included in the sidelink control information may be used as the first information, and no additional first information needs to be added to the sidelink control information. This helps reduce overheads of the sidelink control information, and is more compatible with an existing information format.

In an optional implementation, when a value of a parameter maximum number per reservation for sidelink is 2, a quantity of bits occupied by the frequency resource assignment field satisfies the following relationship:

$$T1 = \left\lceil \log_2 \frac{N_{subChannel}^{SL} \cdot (N_{subChannel}^{SL}+1) \cdot (N_{subChannel}^{SL}+2)}{6} \right\rceil$$ , where T1 represents the quantity of bits occupied by the frequency resource assignment field, $N_{subchannel}^{SL}$ represents a quantity of subchannels included in each time domain unit in a resource pool, and $\lceil x \rceil$ represents rounding up x.

In an optional implementation, when the value of the parameter maximum number per reservation for sidelink is 2, a value of the frequency resource assignment field satisfies the following relationship:

$$V = \quad n_{subCH,1}^{start} + n_{PSCCH}^{shift} \cdot (N_{subchannel}^{SL} + 1 - L_{subCH}) +$$

$$\sum_{i=1}^{L_{subCH}-1} i \cdot (N_{subchannel}^{SL} + 1 - i)$$ , where V represents the value of the frequency resource assignment field,

$n_{subCH,1}^{start}$ represents a starting frequency domain location of a 1st reserved resource indicated by the sidelink control information, $n_{PSCCH}^{shift}$ represents an offset of the starting frequency domain location of the first sidelink control channel relative to the starting frequency domain location of the first sidelink shared channel, the first sidelink control channel is used for carrying the sidelink control information, $L_{subCH}$ represents a quantity of subchannels consecutively occupied by the first sidelink shared channel in each time domain unit occupied by the first sidelink shared channel, and $\lceil x \rceil$ represents rounding up x.

In an optional implementation, when a value of a parameter maximum number per reservation for sidelink is 3, a quantity of bits occupied by the frequency resource assignment field satisfies the following relationship:

$$T1 = \left\lceil \log_2 \frac{N_{subChannel}^{SL} \cdot (N_{subChannel}^{SL}+1)^2 \cdot (N_{subChannel}^{SL}+2)}{12} \right\rceil$$ , where T1 represents the quantity of bits occupied by the frequency resource assignment field, $N_{subchannel}^{SL}$ represents a quantity of subchannels included in each time domain unit in a resource pool, and $\lceil x \rceil$ represents rounding up x.

In an optional implementation, when the value of the parameter maximum number per reservation for sidelink is 3, a value of the frequency resource assignment field satisfies the following relationship:

$$V = \quad n_{subCH,1}^{start} + n_{subCH,2}^{start} \cdot (N_{subchannel}^{SL} + 1 - L_{subCH}) + n_{PSCCH}^{shift} \cdot$$

$$(N_{subchannel}^{SL} + 1 - L_{subCH})^2 + \sum_{i=1}^{L_{subCH}-1} i \cdot (N_{subchannel}^{SL} + 1 - i)^2$$ , where V represents the value of the frequency resource assignment field, $n_{subCH,1}^{start}$ represents a starting frequency domain location of a 1st reserved

resource indicated by the sidelink control information, $n_{subCH,2}^{start}$ represents a starting frequency domain location of a 2nd

reserved resource indicated by the sidelink control information, $n_{PSCCH}^{shift}$ represents an offset of the starting frequency domain location of the first sidelink control channel relative to the starting frequency domain location of the first sidelink shared channel, the first sidelink control channel is used for carrying the sidelink control information, $L_{subCH}$ represents a quantity of subchannels consecutively occupied by the first sidelink shared channel in each time domain unit occupied by the first sidelink shared channel, and $\lceil x \rceil$ represents rounding up x.

A parameter of the frequency resource assignment field (for example, the value of the frequency resource assignment field and/or the quantity of bits occupied by the frequency resource assignment field) may be related to the parameter maximum number per reservation for sidelink. Therefore, the parameter such as the value of the frequency resource assignment field and/or the quantity of occupied bits may be calculated based on the parameter maximum number per reservation for sidelink. The parameter maximum number per reservation for sidelink may indicate a maximum quantity of time domain units that can be reserved in one resource reservation periodicity. The frequency resource assignment field determined in the foregoing calculation manner may indicate the starting frequency domain location of the first sidelink shared channel.

In an optional implementation, the sidelink control information includes a first field, and the first information is the first field. A frequency resource assignment field included in the sidelink control information may be used as the first information, or a first field may be added to the sidelink control information as the first information. The newly added field is used as the first information, so that the first information does not affect other information in the sidelink control information, and an indication is clearer.

In an optional implementation, a quantity of bits occupied by the first field satisfies the following relationship:

$$T2 = \left\lceil \log_2 N_{subChannel}^{SL} \right\rceil$$ , where T2 represents the quantity of bits occupied by the first field, $N_{subChannel}^{SL}$

represents a quantity of subchannels included in each time domain unit in a resource pool, and $\lceil x \rceil$ represents rounding up x.

In an optional implementation, the first sidelink shared channel occupies at least one subchannel, and when a quantity of the at least one subchannel is greater than or equal to 2, the first sidelink control channel occupies a first subchannel in the at least one subchannel, where the first subchannel is a subchannel with lowest interference in the at least one subchannel, and the first sidelink control channel is used for carrying the sidelink control information. The first terminal device may enable the first sidelink control channel to occupy the subchannel with low interference, so that adjacent-band cross-link interference on the receiver (for example, a second terminal device) of the first sidelink control channel is low when the receiver receives the first sidelink control channel on the subchannel. This can improve the transmission performance of the first sidelink control channel.

In an optional implementation, the method further includes: receiving first sidelink information from the second terminal device, where the first sidelink information indicates a resource recommended for the first terminal device; and determining the starting frequency domain location of the first sidelink shared channel and/or the starting frequency domain location of the first sidelink control channel based on the first sidelink information, where the first sidelink control channel is used for carrying the sidelink control information. The second terminal device may recommend the resource to the first terminal device, and the first terminal device may determine the starting frequency domain location of the first sidelink shared channel and/or the starting frequency domain location of the first sidelink control channel based on recommendation of the second terminal device. Therefore, implementation of the first terminal device can be simplified. Alternatively, the second terminal device may not recommend the resource to the first terminal device, and the first terminal device may determine the starting frequency domain location of the first sidelink shared channel and/or the starting frequency domain location of the first sidelink control channel.

According to a second aspect, a second communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The terminal device is, for example, a second terminal device. The method includes: receiving sidelink control information from a first terminal device; and determining a starting frequency domain location of a first sidelink shared channel based on first information included in the sidelink control information, and detecting, based on the starting frequency domain location, the first sidelink shared channel scheduled by using the sidelink control information.

In an optional implementation, the sidelink control information includes a frequency resource assignment field, and the first information is the frequency resource assignment field.

In an optional implementation, when a value of a parameter maximum number per reservation for sidelink is 2, a quantity of bits occupied by the frequency resource assignment field satisfies the following relationship:

$$T1 = \left\lceil \log_2 \frac{N_{subChannel}^{SL} \cdot (N_{subChannel}^{SL}+1) \cdot (N_{subChannel}^{SL}+2)}{6} \right\rceil$$ , where T1 represents the quantity of bits occupied by the frequency resource assignment field, $N_{subChannel}^{SL}$ represents a quantity of subchannels included in each time domain unit in a resource pool, and $\lceil x \rceil$ represents rounding up x.

In an optional implementation, when the value of the parameter maximum number per reservation for sidelink is 2, a value of the frequency resource assignment field satisfies the following relationship:

$$V = \quad n_{subCH,1}^{start} + n_{PSCCH}^{shift} \cdot (N_{subchannel}^{SL} + 1 - L_{subCH}) +$$

$\sum_{i=1}^{L_{subCH}-1} i \cdot \left( N_{subchannel}^{SL} + 1 - i \right)$ , where V represents the value of the frequency resource assignment field, $n_{subCH,1}^{start}$ represents a starting frequency domain location of a 1st reserved resource indicated by the sidelink control information, $n_{PSCCH}^{shift}$ represents an offset of a starting frequency domain location of a first sidelink control channel relative to the starting frequency domain location of the first sidelink shared channel, the first sidelink control channel is used for carrying the sidelink control information, $L_{subCH}$ represents a quantity of subchannels consecutively occupied by the first sidelink shared channel in each time domain unit occupied by the first sidelink shared channel, and $\lceil x \rceil$ represents rounding up *x*.

In an optional implementation, when a value of a parameter maximum number per reservation for sidelink is 3, a quantity of bits occupied by the frequency resource assignment field satisfies the following relationship:

$$T1 = \left\lceil \log_2 \frac{N_{subChannel}^{SL} \cdot \left( N_{subChannel}^{SL} + 1 \right)^2 \cdot \left( N_{subChannel}^{SL} + 2 \right)}{12} \right\rceil$$ , where T1 represents the quantity of bits occupied by the frequency resource assignment field, $N_{subchannel}^{SL}$ represents a quantity of subchannels included in each time domain unit in a resource pool, and $\lceil x \rceil$ represents rounding up *x*.

In an optional implementation, when the value of the parameter maximum number per reservation for sidelink is 3, a value of the frequency resource assignment field satisfies the following relationship:

$$V = n_{subCH,1}^{start} + n_{subCH,2}^{start} \cdot \left( N_{subchannel}^{SL} + 1 - L_{subCH} \right) + n_{PSCCH}^{shift} \cdot$$

$\left( N_{subchannel}^{SL} + 1 - L_{subCH} \right)^2 + \sum_{i=1}^{L_{subCH}-1} i \cdot \left( N_{subchannel}^{SL} + 1 - i \right)^2$ , where V represents the value of the frequency resource assignment field, $n_{subCH,1}^{start}$ represents a starting frequency domain location of a 1st reserved resource indicated by the sidelink control information, $n_{subCH,2}^{start}$ represents a starting frequency domain location of a 2nd reserved resource indicated by the sidelink control information, $n_{PSCCH}^{shift}$ represents an offset of a starting frequency domain location of a first sidelink control channel relative to the starting frequency domain location of the first sidelink shared channel, the first sidelink control channel is used for carrying the sidelink control information, $L_{subCH}$ represents a quantity of subchannels consecutively occupied by the first sidelink shared channel in each time domain unit occupied by the first sidelink shared channel, and $\lceil x \rceil$ represents rounding up *x*.

In an optional implementation, the sidelink control information includes a first field, and the first information is the first field.

In an optional implementation, a quantity of bits occupied by the first field satisfies the following relationship:

$$T2 = \left\lceil \log_2 N_{subChannel}^{SL} \right\rceil$$ , where T2 represents the quantity of bits occupied by the first field, $N_{subchannel}^{SL}$ represents a quantity of subchannels included in each time domain unit in a resource pool, and $\lceil x \rceil$ represents rounding up *x*.

In an optional implementation, the first sidelink shared channel occupies at least one subchannel, and when a quantity of the at least one subchannel is greater than or equal to 2, the first sidelink control channel occupies a first subchannel in the at least one subchannel, where the first subchannel is a subchannel with lowest interference in the at least one subchannel, and the first sidelink control channel is used for carrying the sidelink control information.

In an optional implementation, the method further includes: sending first sidelink information to the first terminal device, where the first sidelink information indicates a resource recommended for the first terminal device.

For technical effects brought by the second aspect or the optional implementations, refer to the descriptions of the technical effects of the first aspect or the corresponding implementations.

According to a third aspect, a third communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The terminal device is, for example, a second terminal device. The method includes: sending first sidelink information to a first terminal device, where the first sidelink information includes second information, and the second information indicates a first frequency domain location, a second frequency domain location, and a third frequency domain location. The first frequency domain location is a starting frequency domain location that is of a second sidelink shared channel and that is recommended for the first terminal device, and the second sidelink shared channel is scheduled by using a second sidelink control channel; the second frequency domain location is a starting frequency domain location that is of a third sidelink shared channel and that is recommended for the first terminal device, and the third sidelink shared channel is scheduled by using a third sidelink control channel; and the third frequency domain location is a starting frequency domain location that is of a fourth sidelink shared channel and that is recommended for the first terminal device, and the fourth sidelink shared channel is scheduled by using a fourth sidelink control channel.

In this embodiment of this application, the second information may indicate the recommended starting frequency domain location of the sidelink shared channel. Therefore, a starting frequency domain location of the sidelink control channel may be the same as or different from that of the sidelink shared channel, so that distribution of the sidelink control channel is more flexible. For example, the sidelink control channel may occupy a subchannel with low interference, to reduce adjacent-band cross-link interference on a receiver when the receiver receives the sidelink control channel, and improve transmission performance of the sidelink control channel.

In an optional implementation, the first sidelink information includes a frequency resource assignment field, and the second information is the frequency resource assignment field.

In an optional implementation, a quantity of bits occupied by the frequency resource assignment field satisfies the following relationship:

$$T3= \left\lceil \log_2 \frac{N_{subChannel}^{SL} \cdot \left(N_{subChannel}^{SL}+1\right)^2 \cdot \left(N_{subChannel}^{SL}+2\right) \cdot \left(N_{subChannel}^{SL}{}^2 + 2N_{subChannel}^{SL}+2\right)}{60} \right\rceil$$

, where T3 represents the quantity of bits occupied by the frequency resource assignment field, $N_{subchannel}^{SL}$ represents a quantity of subchannels included in each time domain unit in a resource pool, and $\lceil x \rceil$ represents rounding up $x$.

In an optional implementation, a value of the frequency resource assignment field satisfies the following relationship:

$$V= n_{subCH,1}^{start} + n_{subCH,2}^{start} \cdot \left(N_{subchannel}^{SL} + 1 - L_{subCH}\right) + n_{PSCCH,0}^{shift} \cdot \left(N_{subchannel}^{SL} + 1 - L_{subCH}\right)^2 + n_{PSCCH,1}^{shift} \cdot L_{subCH} \cdot \left(N_{subchannel}^{SL} + 1 - L_{subCH}\right)^2 + n_{PSCCH,2}^{shift} \cdot L_{subCH}^2 \cdot \left(N_{subchannel}^{SL} + 1 - L_{subCH}\right)^2 + \sum_{i=1}^{L_{subCH}-1} i^3 \cdot \left(N_{subchannel}^{SL} + 1 - i\right)^2$$

, where V represents the value of the frequency resource assignment field, $n_{subCH,1}^{start}$ represents the second frequency domain location, $n_{subCH,2}^{start}$ represents the third frequency domain location, $n_{PSCCH,0}^{shift}$ represents an offset of a starting frequency domain location of the second sidelink control channel relative to the first frequency domain location, $n_{PSCCH,1}^{shift}$ represents an offset of a starting frequency domain location of the third sidelink control channel relative to the second frequency domain location, $n_{PSCCH,2}^{shift}$ represents an offset of a starting frequency domain location of the fourth sidelink control channel relative to the third frequency domain location, $L_{subCH}$ represents a quantity of subchannels consecutively occupied by the second sidelink shared channel in each time domain unit occupied by the second sidelink shared channel, and $\lceil x \rceil$ represents rounding up $x$.

In an optional implementation, the first sidelink information includes a second field, and the second information is the second field.

In an optional implementation, a quantity of bits occupied by the second field satisfies the following relationship:

$$T4=3 \times \left\lceil \log_2 N_{subChannel}^{SL} \right\rceil$$

, where T4 represents the quantity of bits occupied by the second field, $N_{subchannel}^{SL}$ represents a quantity of subchannels included in each time domain unit in a resource pool, and $\lceil x \rceil$ represents rounding up $x$.

In an optional implementation, the second sidelink shared channel occupies at least one subchannel, and when a quantity of the at least one subchannel is greater than or equal to 2, the second sidelink control channel occupies a second subchannel in the at least one subchannel, where the second subchannel is a subchannel with lowest interference in the at least one subchannel.

In an optional implementation, the first sidelink information is sidelink control information or a MAC CE.

For technical effects brought by some optional implementations of the third aspect, refer to the descriptions of the technical effects of the first aspect or the corresponding implementations.

According to a fourth aspect, a fourth communication method is provided. The method may be performed by a terminal device, may be performed by another device including functions of the terminal device, or may be performed by a chip system (or a chip) or another functional module. The chip system or the functional module can implement the functions of the terminal device, and the chip system or the functional module is, for example, disposed in the terminal device. The terminal device is, for example, a first terminal device. The method includes: receiving first sidelink information from a second terminal device, where the first sidelink information includes second information, and the second information indicates a first frequency domain location, a second frequency domain location, and a third frequency domain location. The first frequency domain location is a starting frequency domain location that is of a second sidelink shared channel and that is recommended for the first terminal device, and the second sidelink shared channel is scheduled by using a second sidelink control channel; the second frequency domain location is a starting frequency domain location that is of a third sidelink shared channel and that is recommended for the first terminal device, and the third sidelink shared channel is scheduled by using a third sidelink control channel; and the third frequency domain location is a starting frequency domain location that is of a fourth sidelink shared channel and that is recommended for the first terminal device, and the fourth sidelink shared channel is scheduled by using a fourth sidelink control channel.

In an optional implementation, the first sidelink information includes a frequency resource assignment field, and the second information is the frequency resource assignment field.

In an optional implementation, a quantity of bits occupied by the frequency resource assignment field satisfies the following relationship:

$$T3= \left\lceil log_2 \frac{N^{SL}_{subChannel} \cdot \left(N^{SL}_{subChannel}+1\right)^2 \cdot \left(N^{SL}_{subChannel}+2\right) \cdot \left(N^{SL}_{subChannel}{}^2 + 2N^{SL}_{subChannel}+2\right)}{60} \right\rceil$$

, where T3 represents the quantity of bits occupied by the frequency resource assignment field, $N^{SL}_{subchannel}$ represents a quantity of subchannels included in each time domain unit in a resource pool, and $\lceil x \rceil$ represents rounding up $x$.

In an optional implementation, a value of the frequency resource assignment field satisfies the following relationship:

$$V= n^{start}_{subCH,1} + n^{start}_{subCH,2} \cdot (N^{SL}_{subchannel} + 1 - L_{subCH}) +$$

$$n^{shift}_{PSCCH,0} \cdot (N^{SL}_{subchannel} + 1 - L_{subCH})^2 + n^{shift}_{PSCCH,1} \cdot L_{subCH} \cdot (N^{SL}_{subchannel} + 1 - L_{subCH})^2 +$$

$$n^{shift}_{PSCCH,2} \cdot L^2_{subCH} \cdot (N^{SL}_{subchannel} + 1 - L_{subCH})^2 + \sum_{i=1}^{L_{subCH}-1} i^3 \cdot (N^{SL}_{subchannel} + 1 - i)^2$$

, where V represents the value of the frequency resource assignment field, $n^{start}_{subCH,1}$ represents the second frequency domain location, $n^{start}_{subCH,2}$ represents the third frequency domain location, $n^{shift}_{PSCCH,0}$ represents an offset of a starting frequency domain location of the second sidelink control channel relative to the first frequency domain location, $n^{shift}_{PSCCH,1}$ represents an offset of a starting frequency domain location of the third sidelink control channel relative to the second frequency domain location, $n^{shift}_{PSCCH,2}$ represents an offset of a starting frequency domain location of the fourth sidelink control channel relative to the third frequency domain location, $L_{subCH}$ represents a quantity of subchannels consecutively occupied by the second sidelink shared channel in each time domain unit occupied by the second sidelink shared channel, and $\lceil x \rceil$ represents rounding up x.

In an optional implementation, the first sidelink information includes a second field, and the second information is the second field.

In an optional implementation, a quantity of bits occupied by the second field satisfies the following relationship:

$$T4=3 \times \left\lceil log_2 N^{SL}_{subChannel} \right\rceil$$

, where T4 represents the quantity of bits occupied by the second field, $N^{SL}_{subchannel}$ represents a quantity of subchannels included in each time domain unit in a resource pool, and $\lceil x \rceil$ represents rounding up x.

In an optional implementation, the second sidelink shared channel occupies at least one subchannel, and when a quantity of the at least one subchannel is greater than or equal to 2, the second sidelink control channel occupies a second subchannel in the at least one subchannel, where the second subchannel is a subchannel with lowest interference in the at least one subchannel.

In an optional implementation, the first sidelink information is sidelink control information or a MAC CE.

For technical effects brought by some optional implementations of the fourth aspect, refer to the descriptions of the technical effects of the third aspect or the corresponding implementations.

According to a fifth aspect, a communication apparatus is provided. The communication apparatus may be the first terminal device according to any one of the first aspect to the fourth aspect. The communication apparatus has functions of the foregoing first terminal device. The communication apparatus is, for example, the first terminal device, a large device including the first terminal device, or a functional module in the first terminal device, for example, a baseband apparatus or a chip system. In an optional implementation, the communication apparatus includes the baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the transceiver unit (or the sending unit) is configured to send sidelink control information, where the sidelink control information includes first information, the first information indicates a starting frequency domain location of a first sidelink shared channel, and the first sidelink shared channel is scheduled by using the sidelink control information.

In an optional implementation, the transceiver unit (or the receiving unit) is configured to receive first sidelink information from a second terminal device, where the first sidelink information includes second information, and the second information indicates a first frequency domain location, a second frequency domain location, and a third frequency domain location. The first frequency domain location is a starting frequency domain location that is of a second sidelink shared channel and that is recommended for the first terminal device, and the second sidelink shared channel is scheduled by using a second sidelink control channel; the second frequency domain location is a starting frequency domain location that is of a third sidelink shared channel and that is recommended for the first terminal device, and the third sidelink shared channel is scheduled by using a third sidelink control channel; and the third frequency domain location is a starting frequency domain location that is of a fourth sidelink shared channel and that is recommended for the first terminal device, and the fourth sidelink shared channel is scheduled by using a fourth sidelink control channel.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform the functions of the first terminal device in any one of the first aspect to the fourth aspect.

According to a sixth aspect, a communication apparatus is provided. The communication apparatus may be the second terminal device according to any one of the first aspect to the fourth aspect. The communication apparatus has functions of the foregoing second terminal device. The communication apparatus is, for example, the second terminal device, a large device including the second terminal device, or a functional module in the second terminal device, for example, a baseband apparatus or a chip system. In an optional implementation, the communication apparatus includes the baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. For an implementation of the transceiver unit, refer to the descriptions of the fifth aspect.

In an optional implementation, the transceiver unit (or the sending unit) is configured to send first sidelink information to a first terminal device, where the first sidelink information includes second information, and the second information indicates a first frequency domain location, a second frequency domain location, and a third frequency domain location. The first frequency domain location is a starting frequency domain location that is of a second sidelink shared channel and that is recommended for the first terminal device, and the second sidelink shared channel is scheduled by using a second sidelink control channel; the second frequency domain location is a starting frequency domain location that is of a third sidelink shared channel and that is recommended for the first terminal device, and the third sidelink shared channel is scheduled by using a third sidelink control channel; and the third frequency domain location is a starting frequency domain location that is of a fourth sidelink shared channel and that is recommended for the first terminal device, and the fourth sidelink shared channel is scheduled by using a fourth sidelink control channel.

In an optional implementation, the transceiver unit (or the receiving unit) is configured to receive sidelink control information from a first terminal device; and the processing unit is configured to: determine a starting frequency domain location of a first sidelink shared channel based on first information included in the sidelink control information, and detect, based on the starting frequency domain location, the first sidelink shared channel scheduled by using the sidelink control information.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform the functions of the second terminal device in any one of the first aspect to the fourth aspect.

According to a seventh aspect, a communication apparatus is provided. The communication apparatus may be a first terminal device, or a chip or a chip system used in the first terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the first terminal device in the foregoing aspects.

According to an eighth aspect, a communication apparatus is provided. The communication apparatus may be a second terminal device, or a chip or a chip system used in the second terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the second terminal device in the foregoing aspects.

According to a ninth aspect, a communication system is provided, including a first terminal device and a second terminal device. The first terminal device is configured to perform the method performed by the first terminal device according to any one of the first aspect to the fourth aspect, and the second terminal device is configured to perform the method performed by the second terminal device according to any one of the first aspect to the third aspect. For example, the first terminal device may be implemented by the communication apparatus in the fifth aspect or the seventh aspect, and the second terminal device may be implemented by the communication apparatus in the sixth aspect or the eighth aspect.

According to a tenth aspect, a computer-readable storage medium is provided. The computer-readable storage medium is configured to store a computer program or instructions. When the computer program or the instructions are run, the method performed by the first terminal device or the second terminal device in the foregoing aspects is implemented.

According to an eleventh aspect, a computer program product including instructions is provided. When the computer program product runs on a computer, the methods according to the foregoing aspects are implemented.

According to a twelfth aspect, a chip system is provided, including a processor and an interface. The processor is configured to invoke instructions from the interface and run the instructions, to enable the chip system to implement the methods according to the foregoing aspects.

BRIEF DESCRIPTION OF DRAWINGS

FIG. 1A is a diagram of adjacent-band cross-link interference between UEs;
FIG. 1B is a diagram of a distribution manner of a PSCCH and a PSSCH sent by a UE;
FIG. 2 is a diagram of adjacent-band self-interference on a UE;
FIG. 3A is a diagram of an application scenario according to an embodiment of this application;
FIG. 3B is a diagram of another application scenario according to an embodiment of this application;
FIG. 4 is a flowchart of a communication method according to an embodiment of this application;
FIG. 5A to FIG. 5C are several diagrams of a frequency domain location of a PSCCH according to an embodiment of this application;
FIG. 6 is a flowchart of another communication method according to an embodiment of this application;
FIG. 7 is a diagram of a frequency domain location of a PSCCH according to an embodiment of this application;
FIG. 8 is a diagram of an apparatus according to an embodiment of this application; and
FIG. 9 is a diagram of another apparatus according to an embodiment of this application.

DESCRIPTION OF EMBODIMENTS

To make objectives, technical solution, and advantages of embodiments of this application clearer, the following further describes embodiments of this application in detail with reference to accompanying drawings.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects.

For example, A/B indicates A or B. "At least one of the following items (pieces)" or a similar expression thereof indicates any combination of these items, including a single item (piece) or any combination of a plurality of items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, and are not used to limit sizes, content, sequences, time sequences, priorities, importance, or the like of the plurality of objects. For example, first information and second information may be same information, or may be different information. In addition, this name does not indicate that the two pieces of information occupy different resources, sending sequences, content, sizes, application scenarios, priorities, importance, or the like. In addition, step numbers in embodiments described in this application are merely intended to distinguish between different steps, but are not intended to limit a sequence of the steps.

The following describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios. For example, the terminal device includes but is not limited to terminal devices in the following scenarios such as cellular communication, device-to-device (device-to-device, D2D) communication, vehicle-to-everything (vehicle-to-everything, V2X), machine-to-machine/machine-type communication (machine-to-machine/machine-type communication, M2M/MTC), an internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, a smart office, a smart wearable, smart transportation, a smart city (smart city), an uncrewed aerial vehicle, and a robot. The terminal device may sometimes be referred to as a UE, a terminal, an access station, a UE station, a remote station, a wireless communication device, a user apparatus, or the like. For ease of description, an example in which the terminal device is the UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB (NodeB), an evolved NodeB (evolved NodeB, eNodeB)/eNB, or a next generation NodeB (next generation NodeB, gNodeB)/gNB, a transmission reception point (transmission reception point, TRP), a base station evolved after a 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a V2X technology may be a road side unit (road side unit, RSU). The following uses an example in which the access network device is a base station for description. The base station may communicate with the terminal device, or may communicate with the terminal device via a relay station. The terminal device may communicate with the plurality of base stations in different access technologies. The core network device is configured to implement functions such as mobility management, data processing, session management, and policy and charging. Names of devices that implement core network functions in systems of different access technologies may be different. This is not limited in embodiments this application. A 5th generation (5th generation, 5G) mobile communication technology system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is the network device is used for describing the technical solutions provided in embodiments of this application.

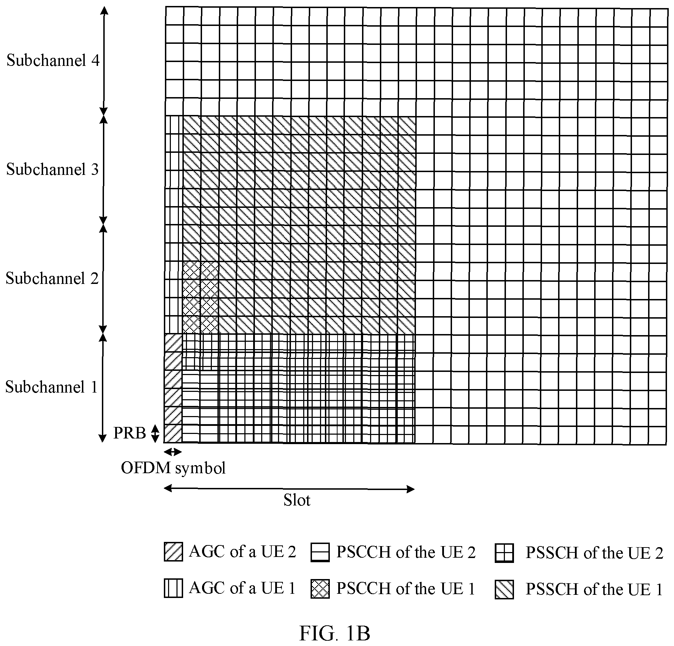

Currently, a PSCCH and a PSSCH may be multiplexed in a manner of time domain overlapping and frequency domain non-overlapping. In addition, to reduce complexity of blind detection on the PSCCH by a device, PSCCH occupation may start from a start physical resource block (physical resource block, PRB) of a subchannel, and the PSCCH and the PSSCH occupy a same start PRB in frequency domain. FIG. 1B is a diagram of multiplexing a PSCCH and a PSSCH sent by two UEs. A PSCCH/PSSCH sent by a UE 2 occupies one subchannel (a subchannel 1 in FIG. 1B) in total in frequency domain, and a PSCCH/PSSCH sent by a UE 1 occupies two subchannels (subchannels 2 and 3 in FIG. 1B) in total in frequency domain. One PSCCH sent by a UE occupies only one subchannel. For example, the PSCCH of the UE 1 occupies the subchannel 2, and the PSCCH of the UE 2 occupies the subchannel 1. One PSSCH sent by a UE may occupy one or more subchannels. For example, the PSSCH of the UE 1 occupies the subchannel 2 and 3, and the PSSCH of the UE 2 occupies the subchannel 1. A quantity of PRBs included in one subchannel in FIG. 1B is 6. This is merely an example, and is not actually limited.

In a multi-user scenario, a UE may face, in a receiving process of an SL, adjacent-channel interference generated in a sending process of another UE.

FIG. 1A is a diagram of a receiving and sending process of three UEs. A UE 1 and a UE 2 occupy adjacent subchannels in a same slot in an FDM manner to send a PSCCH/PSSCH. Refer to FIG. 1B. The UE 1 occupies subchannels 2 and 3 to send a PSCCH/PSSCH, and the UE 2 occupies a subchannel 1 to send a PSCCH/PSSCH. The subchannels 1, 2, and 3 are three consecutive subchannels in frequency domain, and a frequency domain location relationship among the subchannels 1, 2, and 3 is shown in FIG. 1A or FIG. 1B. In practice, considering a non-ideal feature of a transmitter PA, power of sending a PSCCH/PSSCH by a UE may leak to an adjacent frequency band. Consequently, adjacent-band cross-link interference exists between UEs. For example, in FIG. 1A, a UE 3 is a receiving UE of the UE 1, and the UE 3 receives the PSCCH/PSSCH from the UE 1 on the subchannel 2 and the subchannel 3. Because the UE 2 performs a sending process on the subchannel 1 in the same slot, when the UE 3 receives the PSCCH/PSSCH from the UE 1, adjacent-band cross-link interference from the UE 2 is caused to the UE 3. Currently, a starting frequency domain location of the PSCCH sent by the UE is the same as that of the PSSCH sent by the UE; and the PSSCH may occupy one or more subchannels, but the PSCCH occupies only one subchannel. In this case, because the UE 1 occupies the subchannel 2 and the subchannel 3 for sending, the PSSCH is distributed on the subchannel 2 and the subchannel 3, but the PSCCH is distributed only on the subchannel 2; and because the UE 2 occupies the subchannel 1 for sending, both the PSSCH and the PSCCH are distributed on the subchannel 1. The sending process of the UE 2 on the subchannel 1 causes high adjacent-band cross-link interference to a receiving process of the UE 3 on the subchannel 2, severely affecting transmission performance of the PSCCH.

In a subband non-overlapping full-duplex scenario, when a UE is a subband non-overlapping full-duplex device, the UE may face, in a receiving process of an SL, adjacent-band self-interference generated in a sending process of the UE.

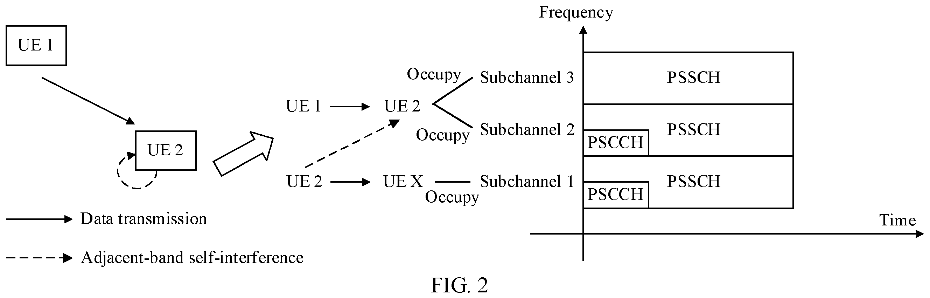

FIG. 2 is a diagram of a receiving and sending process of two UEs. A UE 2 is a subband non-overlapping full-duplex device, and the UE 2 is a receiving UE of a UE 1. The UE 1 occupies subchannels 2 and 3 to send a PSCCH/PSSCH, and the UE 2 occupies a subchannel 1 to send a PSCCH/PSSCH. The subchannels 1, 2, and 3 are three consecutive subchannels in frequency domain, and a frequency domain location relationship among the subchannels 1, 2, and 3 is shown in FIG. 2 or FIG. 1B.

In FIG. 2, because the UE 2 is the receiving UE of the UE 1, the UE 2 may receive the PSCCH/PSSCH from the UE 1 on the subchannel 2 and the subchannel 3. In addition, because the UE 2 performs a sending process on the subchannel 1 in a same slot, when the UE 2 receives the PSCCH/PSSCH from the UE 1, adjacent-band self-interference generated in the sending process of the UE 2 occurs on the UE 2. Currently, a starting frequency domain location of the PSCCH sent by the UE is the same as that of the PSSCH sent by the UE; and the PSSCH may occupy one or more subchannels, but the PSCCH occupies only one subchannel. In this case, because the UE 1 occupies the subchannel 2 and the subchannel 3 to send the PSCCH/PSSCH, the PSSCH sent by the UE 1 is distributed on the subchannel 2 and the subchannel 3, and the PSCCH sent by the UE 1 is distributed only on the subchannel 2; and because the UE 2 occupies the subchannel 1 for sending, both the PSSCH and the PSCCH sent by the UE 2 are distributed on the subchannel 1. The sending process of the UE 2 on the subchannel 1 causes high adjacent-band self-interference to a receiving process of the UE 2 on the subchannel 2, severely affecting transmission performance of the PSCCH.

In view of this, in embodiments of this application, the first information may indicate a starting frequency domain location of a first sidelink shared channel. In other words, a receiver may determine the starting frequency domain location of the first sidelink shared channel based on the first information. Therefore, a starting frequency domain location of a first sidelink control channel may be the same as or different from the start frequency domain location of the first sidelink shared channel, so that distribution of the first sidelink control channel is more flexible. For example, the first sidelink control channel may occupy a subchannel with low interference, to reduce adjacent-band cross-link interference or adjacent-band self-interference on the receiver of the first sidelink control channel when the receiver receives the first sidelink control channel, and improve transmission performance of the sidelink control channel.

The technical solutions provided in embodiments of this application may be applied to a 4th generation mobile communication technology (4th generation, 4G) system such as a long term evolution (long term evolution, LTE) system, may be applied to a 5G system such as a new radio (new radio, NR) system, or may be further applied to a next generation mobile communication system or another similar communication system, for example, a 6th generation mobile communication technology (6th generation, 6G) system. This is not specifically limited. In addition, the technical solutions provided in embodiments of this application may be applied to a device-to-device (device-to-device, D2D) scenario, for example, an NR-D2D scenario, or may be applied to a V2X scenario, for example, an NR-V2X scenario. For example, the technical solutions provided in embodiments of this application may be used in fields such as intelligent driving, assisted driving, or intelligent connected vehicles.

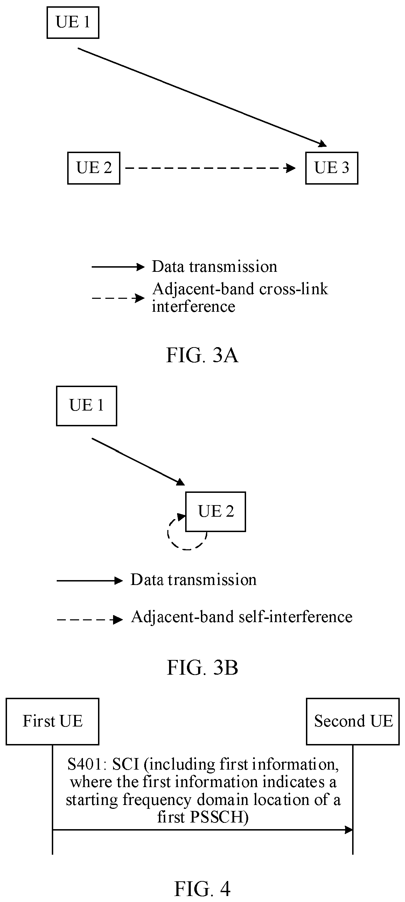

FIG. 3A shows a communication network architecture to which an embodiment of this application is applicable. FIG. 3A includes a UE 1, a UE 2, and a UE 3. The UE 1 may send a PSCCH and/or a PSSCH, and the UE 3 is a receiver of the UE 1. The UE 2 may also send a PSSCH and/or a PSCCH, and a receiver of the UE 2 may be the UE 1 or the UE 3, or may be another UE. For example, if a subchannel occupied by the UE 2 during sending is adjacent to a subchannel occupied by the UE 1 during sending, a sending process of the UE 2 may cause adjacent-band cross-link interference to a receiving process of the UE 3.

Further, FIG. 3B is another communication network architecture to which an embodiment of this application is applicable. FIG. 3B includes a UE 1 and a UE 2. The UE 2 is a subband non-overlapping full-duplex device, the UE 1 may send a PSCCH and/or a PSSCH, and the UE 2 is a receiver of the UE 1. In addition, the UE 2 may also send a PSSCH and/or a PSCCH, and a receiver of the UE 2 may be the UE 1 or another UE. For example, if a subchannel occupied by the UE 2 during sending is adjacent to a subchannel occupied by the UE 1 during sending, a sending process of the UE 2 may cause adjacent-band self-interference to a receiving process of the UE 2.

To better describe embodiments of this application, the following describes methods provided in embodiments of this application with reference to accompanying drawings. In embodiments of this application, a time domain unit is, for example, a subframe (subframe), a slot (slot), a mini-slot (mini-slot), or an orthogonal frequency division multiplexing (orthogonal frequency division multiplexing, OFDM) symbol (symbol). In embodiments of this application, a sidelink control channel is, for example, a PSCCH, or may be another control channel on a sidelink. The PSCCH is used as an example below. For example, a first sidelink control channel may be a first PSCCH. A sidelink shared channel is, for example, a PSSCH, or may be another shared channel on the sidelink. The PSSCH is used as an example below. For example, a first sidelink shared channel may be a first PSSCH.

Unless otherwise specified below, in the accompanying drawings corresponding to embodiments of this application, steps represented by dashed lines are all optional steps. The methods provided in embodiments of this application may be applied to the network architecture shown in FIG. 3A. For example, a first UE in embodiments of this application may be the UE 1 in FIG. 3A, and a second UE in embodiments of this application may be the UE 3 in FIG. 3A. Alternatively, the methods provided in embodiments of this application may be applied to the network architecture shown in FIG. 3B. For example, the first UE in embodiments of this application may be the UE 1 in FIG. 3B, and the second UE in embodiments of this application may be the UE 2 in FIG. 3B.

An embodiment of this application provides a communication method. FIG. 4 is a flowchart of the method.

S401: A first UE sends sidelink control information. Correspondingly, a second UE receives the sidelink control information. The sidelink control information is, for example, sidelink control information (sidelink control information, SCI), and the SCI is, for example, first-stage SCI (SCI 1). An example in which the sidelink control information is the SCI is used below.

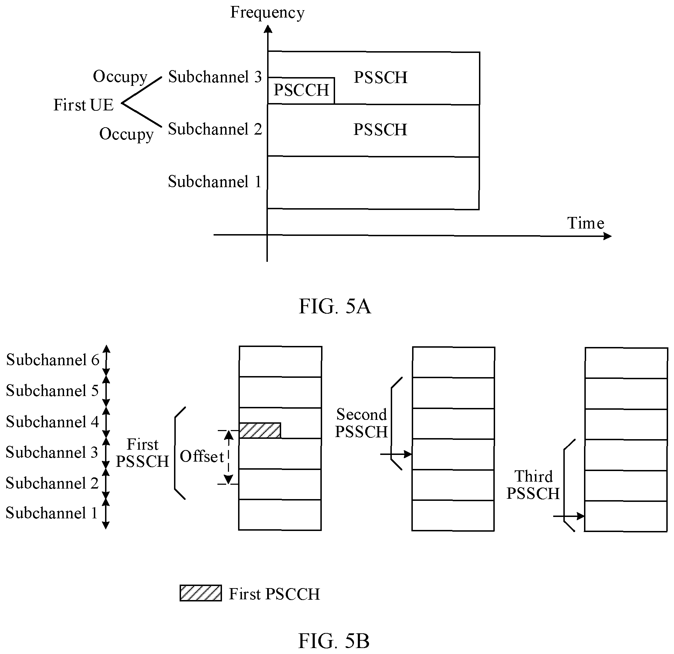

The SCI may include first information, the first information may indicate a starting frequency domain location of a first PSSCH, and the first PSSCH may be scheduled by using the SCI. For example, that the SCI is carried on a first PSCCH may also be understood as that the first PSSCH is scheduled by using the first PSCCH. Optionally, the first information indicates the starting frequency domain location of the first PSSCH. In an optional indication manner, the first information indicates an offset of the starting frequency domain location of the first PSSCH relative to a starting frequency domain location of the first PSCCH, or indicates an offset of a starting frequency domain location of the first PSCCH relative to the starting frequency domain location of the first PSSCH. In this case, a receiver (for example, the second UE) of the SCI can determine a starting frequency domain location of the SCI through blind detection, and the second UE can determine the starting frequency domain location of the first PSSCH based on the first information and the starting frequency domain location of the SCI. Optionally, a unit of the offset indicated by the first information is, for example, a subchannel. For example, the offset is a quantity of subchannels spaced between the starting frequency domain location of the first PSSCH and the starting frequency domain location of the first PSCCH. Alternatively, a unit of the offset indicated by the first information may be a resource block (resource block, RB) set (set), a PRB, or the like. For example, the offset is a quantity of RB sets or PRBs spaced between the starting frequency domain location of the first PSSCH and the starting frequency domain location of the first PSCCH. This is not specifically limited. Refer to FIG. 5A. For example, a first UE sends a first PSSCH and a first PSSCH to a second UE, and a subchannel 2 and a subchannel 3 are occupied. A starting frequency domain location of the first PSSCH (a PSSCH in FIG. 5A) is the subchannel 2, and a starting frequency domain location of the first PSCCH (a PSCCH in FIG. 5A) is the subchannel 3. In this case, an offset may be 1.

Alternatively, the first information indicates the starting frequency domain location of the first PSSCH. In another optional indication manner, the first information indicates an index or an identifier of the starting frequency domain location of the first PSSCH. The frequency domain location of the subchannel shown in FIG. 5A is used as an example. For example, if the starting frequency domain location of the first PSSCH is the subchannel 2, the first information may include an index or an identifier of the subchannel 2. The receiver (for example, the second UE) of the SCI can determine the starting frequency domain location of the first PSSCH based on the first information without reference to the starting frequency domain location of the SCI, so that an execution process of the second UE can be simplified.

It can be learned that, in this embodiment of this application, the first information included in the SCI may indicate the starting frequency domain location of the PSSCH. Therefore, a starting frequency domain location of a PSSCH sent by a UE may be the same as or different from that of a PSCCH sent by the UE. In other words, it is no longer required that the starting frequency domain location of the PSCCH sent by the UE is the same as that of the PSSCH sent by the UE, and the PSCCH may be flexibly distributed on a subchannel occupied by the PSSCH, so that the UE schedules the PSCCH more flexibly. For example, the first PSSCH occupies at least one subchannel. If a quantity of the at least one subchannel is greater than or equal to 2, the first PSCCH is not necessarily located on a subchannel (that is, a start subchannel of the first PSSCH) that has a lowest frequency or a smallest number (or index) in the at least one subchannel, but may be located on another subchannel in the at least one subchannel. For example, the first UE may determine a subchannel with lowest interference (for example, a subchannel with minimum adjacent-band cross-link interference or adjacent-band self-interference) in the at least one subchannel, and the first PSCCH may occupy the subchannel, so that the adjacent-band cross-link interference or the adjacent-band self-interference on a receiver (for example, the second UE) of the first UE is low when the receiver of the first UE receives the first PSCCH on the subchannel. This can improve transmission performance of the first PSCCH.

Optionally, the first UE may receive SL information, for example, first SL information, from the second UE. The first SL information may indicate a resource recommended for the first UE, and the resource recommended for the first UE may include the PSCCH and/or the PSSCH. For example, the second UE determines, by using a resource sensing (sensing) process, resources with low interference, and may recommend the resources to the first UE by using the first SL information. Optionally, the first UE may also perform resource sensing, to determine the resource with low interference. For example, based on the resource recommended by the second UE and/or based on a resource sensing result of the first UE, the first UE may determine the first PSCCH and/or the first PSSCH, or determine a frequency domain location (for example, the starting frequency domain location) of the first PSCCH and/or a frequency domain location (for example, the starting frequency domain location) of the first PSSCH. For example, the first UE determines a subchannel with low interference based on the resource recommended by the second UE and/or the resource sensing result of the first UE, to determine that the subchannel is a start subchannel of the PSCCH. A process in which the second UE recommends the resource is described in another embodiment below.

The first information may be implemented in different manners, and the following provides examples for description.

1. The SCI includes a frequency resource assignment (frequency resource assignment) field, and the frequency resource assignment field may be used as the first information.

The SCI may be used for scheduling a resource (for example, scheduling the first PSSCH), or the SCI may be used for scheduling a resource and reserving a resource (for example, reserving the PSSCH). According to a current solution, if the starting frequency domain location of the PSSCH is the same as the starting frequency domain location of the PSCCH, the receiver UE can determine, through blind detection on the PSCCH, the frequency domain location of the PSSCH scheduled by using the PSCCH. Therefore, the SCI may not need to indicate the starting frequency domain location of the first PSSCH. However, in this embodiment of this application, it is not required that the starting frequency domain location of the PSSCH is the same as the starting frequency domain location of the PSCCH. Therefore, in this embodiment of this application, regardless of whether the first PSSCH scheduled by using the SCI is used for initial transmission or retransmission, the frequency resource assignment field may indicate the starting frequency domain location of the first PSSCH, so that the receiver UE can determine the starting frequency domain location of the first PSSCH according to the indication of the SCI. In this way, the first PSSCH can be detected.

Optionally, the frequency resource assignment field may further indicate a quantity of subchannels consecutively occupied by the first PSSCH in each time domain unit occupied by the first PSSCH, and/or a starting frequency domain location of each reserved resource (for example, the reserved PSSCH). A quantity of subchannels consecutively occupied, in a time domain unit, by a PSSCH scheduled by using SCI may be equal to a quantity of subchannels consecutively occupied, in a time domain unit, by a PSSCH reserved by using the SCI, and quantities of subchannels occupied, in time domain units, by a PSSCH sent by a UE may be equal. Therefore, it is equivalent to that the frequency resource assignment field indicates the quantity of subchannels occupied, in the time domain unit, by the PSSCH scheduled by using the SCI and the quantity of subchannels occupied, in the time domain unit, by the PSSCH reserved by using the SCI. FIG. 1B is used as an example. For example, if the first PSSCH occupies the subchannels 2 and 3 in FIG. 1B, the frequency resource assignment field may indicate that a quantity of subchannels occupied by the first PSSCH in each slot occupied by the first PSSCH is 2.

Further, FIG. 5B is a diagram of a parameter indicated by a frequency resource assignment field. For example, if the SCI is used for scheduling a first PSSCH (the first PSSCH may be used for initial transmission), and the SCI is further used for reserving a second PSSCH and a third PSSCH (the second PSSCH is used for first retransmission, and the third PSSCH is used for retransmission again), the frequency resource assignment field may indicate a quantity (for example, 3) of subchannels occupied by the first PSSCH in each time domain unit occupied by the first PSSCH, and indicate a starting frequency domain location (as shown by an arrow corresponding to the second PSSCH in FIG. 5B, for example, a subchannel 3 in FIG. 5B) of the second PSSCH and a starting frequency domain location (as shown by an arrow corresponding to the third PSSCH in FIG. 5B, for example, a subchannel 1 in FIG. 5B) of the third PSSCH. In addition, the frequency resource assignment field may further indicate a starting frequency domain location of the first PSSCH. For example, the frequency resource assignment field indicates an offset of a starting frequency domain location of a first PSCCH relative to the starting frequency domain location of the first PSSCH. For a case shown in FIG. 5B, the frequency resource assignment field may indicate that the offset is 2.

According to an indication of the frequency resource assignment field, the receiver UE (for example, the second UE) can determine the starting frequency domain location of the first PSSCH based on the frequency resource assignment field, or can determine the frequency domain location of the first PSSCH based on the frequency resource assignment field (for example, the second UE can determine the starting frequency domain location of the first PSSCH based on the frequency resource assignment field, and then, with reference to the starting frequency domain location of the first PSSCH and the quantity, indicated by the frequency resource assignment field, of subchannels occupied by the first PSSCH in each time domain unit occupied by the first PSSCH, the second UE can determine the frequency domain location of the first PSSCH, in other words, determine the subchannel occupied by the first PSSCH), so that the first PSSCH can be detected. This is equivalent to that a function of the frequency resource assignment field is extended in this embodiment of this application, so that the frequency resource assignment field can indicate more parameters. The receiver UE can detect (or receive) the first PSSCH based on the frequency resource assignment field, so that a PSSCH detection success rate is improved.

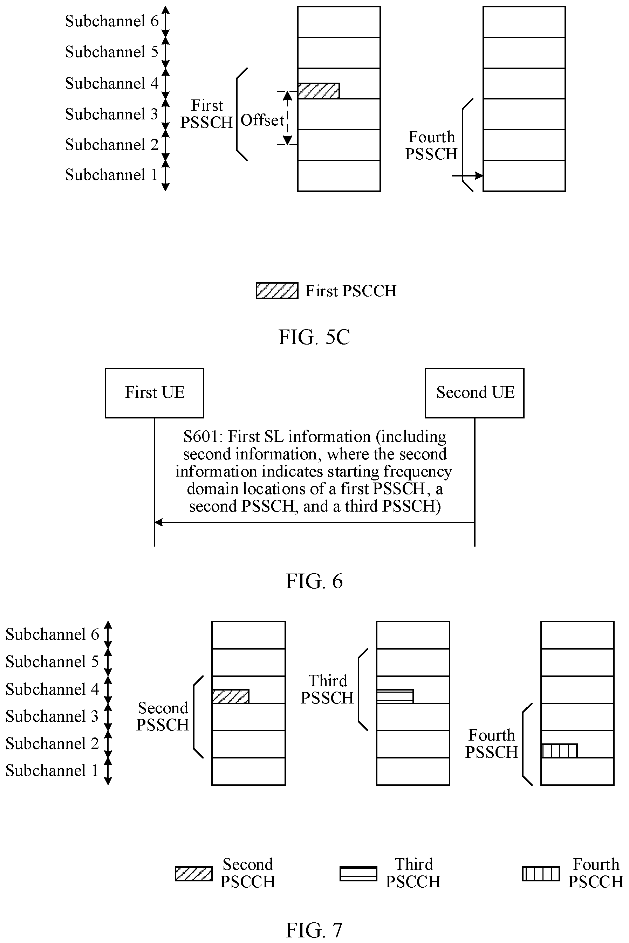

Currently, configurations for initial transmission and retransmission are generally one initial transmission and two retransmissions, and SCI is sent in both an initial transmission process and a retransmission process. Therefore, a first PSSCH scheduled by using the SCI may be used for initial transmission or may be used for retransmission. In FIG. 5B, an example in which the first PSSCH is used for initial transmission is used. In this case, if the first PSSCH is used for first retransmission (for example, the first PSSCH scheduled by using the SCI is a resource used for first retransmission), the SCI may be further used for reserving one PSSCH instead of two PSSCHs. For this, refer to FIG. 5C. For example, the first PSSCH scheduled by using the SCI is used for first retransmission, and the SCI is further used for reserving a fourth PSSCH for retransmission. In this case, the frequency resource assignment field may indicate the starting frequency domain location of the first PSSCH. Optionally, the frequency resource assignment field may further indicate the quantity (for example, 3) of subchannels occupied by the first PSSCH in each time domain unit occupied by the first PSSCH, and indicate a starting frequency domain location (for example, a subchannel 1 in FIG. 5C) of the fourth PSSCH. Alternatively, if the first PSSCH is used for retransmission again (for example, the first PSSCH scheduled by using the SCI is a resource used for retransmission again), the SCI may not be used for reserving a resource. The frequency resource assignment field may indicate the starting frequency domain location of the first PSSCH. Optionally, the frequency resource assignment field may further indicate the quantity of subchannels occupied by the first PSSCH in each time domain unit occupied by the first PSSCH. In FIG. 5B and FIG. 5C, the quantity of subchannels occupied by the PSSCH, the frequency domain location of the PSSCH, a frequency domain location of the PSCCH, and the like are merely examples, and are not intended to limit this embodiment of this application.

Optionally, the parameter of the frequency resource assignment field (for example, a value of the frequency resource assignment field and/or a quantity of bits occupied by the frequency resource assignment field) may be related to a parameter maximum number per reservation for sidelink (sl-MaxNumPerReserve). The parameter sl-MaxNumPerReserve may indicate a maximum quantity of time domain units that can be reserved in one resource reservation periodicity. The parameter sl-MaxNumPerReserve is, for example, included in configuration information of a resource pool of the first UE. The resource pool of the first UE is, for example, a resource pool configured by a network device for the first UE, a resource pool preconfigured in the first UE, or a resource pool configured for an upper layer of the first UE.

For example, if a value of sl-MaxNumPerReserve is 2, the quantity of bits occupied by the frequency resource assignment field may satisfy the following relationship:

$$T1=\left\lceil \log_2 \frac{N_{subChannel}^{SL} \cdot (N_{subChannel}^{SL}+1) \cdot (N_{subChannel}^{SL}+2)}{6} \right\rceil \quad \text{(Formula 1)}$$

In Formula 1, T1 represents the quantity of bits occupied by the frequency resource assignment field. $\lceil x \rceil$

represents rounding up *x*, and this explanation is used in formulas in embodiments of this application. $N_{subchannel}^{SL}$ represents a quantity of subchannels included in each time domain unit in a resource pool, and the resource pool is the resource pool of the first UE.

Optionally, if the value of the parameter sl-MaxNumPerReserve is 2, the value of the frequency resource assignment field may satisfy the following relationship:

$$V= \ n_{subCH,1}^{start} + n_{PSCCH}^{shift} \cdot (N_{subchannel}^{SL} + 1 - L_{subCH}) + \sum_{i=1}^{L_{subCH}-1} i \cdot (N_{subchannel}^{SL} + 1 - i) \quad \text{(Formula 2)}$$

In Formula 2, V represents the value of the frequency resource assignment field. The value of the frequency resource assignment field may be referred to as a frequency resource indication value (frequency resource indication value, FRIV), that is, V=FRIV. If the value of the parameter sl-MaxNumPerReserve is 2, it indicates that the SCI indicates two resources in total. For example, the two resources include a first PSSCH scheduled by using the SCI and a PSSCH reserved by using the SCI. $n_{subCH,1}^{start}$ may represent a starting frequency domain location of a 1st reserved resource (that is, the reserved PSSCH) indicated by the SCI. FIG. 5C is used as an example. For example, if the SCI is used for scheduling the first PSSCH and reserving the fourth PSSCH, $n_{subCH,1}^{start}$ may represent the starting frequency domain location of the fourth PSSCH. For example, $n_{subCH,1}^{start}$ represents an index or an identifier of a start subchannel of the fourth PSSCH. For example, the start subchannel is the subchannel 1 in FIG. 5C. $n_{PSCCH}^{shift}$ represents an offset of a starting frequency domain location of a first PSCCH relative to the starting frequency domain location of the first PSSCH. For example, in FIG. 5C, if the first PSCCH is located on a subchannel 4, and the first PSSCH is located on the subchannel 2, $n_{PSCCH}^{shift}$ may be equal to 2. $L_{subCH}$ represents a quantity of subchannels consecutively occupied by the first PSSCH in each time domain unit occupied by the first PSSCH. For example, in FIG. 5C, $L_{subCH}$ may be equal to 3.

Optionally, if the value of the parameter sl-MaxNumPerReserve is 3, the quantity of bits occupied by the frequency resource assignment field may satisfy the following relationship:

$$T1 = \left\lceil \log_2 \frac{N_{subChannel}^{SL} \cdot (N_{subChannel}^{SL}+1)^2 \cdot (N_{subChannel}^{SL}+2)}{12} \right\rceil \quad \text{(Formula 3)}$$

In Formula 3, T1 represents the quantity of bits occupied by the frequency resource assignment field. For descriptions of other parameters, refer to the foregoing descriptions.

Optionally, if the value of the parameter sl-MaxNumPerReserve is 3, the value of the frequency resource assignment field may satisfy the following relationship:

$$V= \ n_{subCH,1}^{start} + n_{subCH,2}^{start} \cdot (N_{subchannel}^{SL} + 1 - L_{subCH}) + n_{PSCCH}^{shift} \cdot (N_{subchannel}^{SL} + 1 - L_{subCH})^2 + \sum_{i=1}^{L_{subCH}-1} i \cdot (N_{subchannel}^{SL} + 1 - i)^2 \quad \text{(Formula 4)}$$

In Formula 4, V represents the value of the frequency resource assignment field, that is, the FRIV of the frequency resource assignment field. If the value of the parameter sl-MaxNumPerReserve is 3, it indicates that the SCI indicates three resources in total. For example, the three resources include one first PSSCH scheduled by using the SCI and two PSSCHs reserved by using the SCI. $n_{subCH,1}^{start}$ may represent a starting frequency domain location of a 1st reserved resource (that is, the 1st reserved PSSCH) indicated by the SCI. $n_{subCH,2}^{start}$ may represent a starting frequency domain location of a 2nd reserved resource (that is, the 2nd reserved PSSCH) indicated by the SCI. FIG. 5B is used as an example. For example, if the SCI is used for scheduling the first PSSCH and reserving the second PSSCH and the third PSSCH, $n_{subCH,1}^{start}$ may represent the starting frequency domain location of the second PSSCH. For example, $n_{subCH,1}^{start}$ represents an index or an identifier of a start subchannel of the second PSSCH. For example, the start subchannel is the subchannel 3 in FIG. 5B. $n_{subCH,2}^{start}$ may represent the starting frequency domain location of the third PSSCH. For example, $n_{subCH,2}^{start}$ represents an index or an identifier of a start subchannel of the third PSSCH. For example, the start subchannel is the subchannel 1 in FIG. 5B. $n_{PSCCH}^{shift}$ represents the offset of the starting frequency domain location of the first PSCCH relative to the starting frequency domain location of the first PSSCH. For example, in FIG. 5B, if the first PSCCH is located on a subchannel 4, and the first PSSCH is located on a subchannel 2, $n_{PSCCH}^{shift}$ may be equal to 2. $L_{subCH}$ represents a quantity of subchannels consecutively occupied by the first PSSCH in each time domain unit occupied by the first PSSCH. For example, in FIG. 5B, $L_{subCH}$ may be equal to 3. In addition, in a resource used for initial transmission and a resource used for retransmission, subchannels on which PSSCHs are located may be the same or different, and subchannels on which PSCCHs are located may be the same or different. In resources used for different times of retransmission (for example, first retransmission and retransmission again), subchannels on which PSSCHs are located may be the same or different, and subchannels on which PSCCHs are located may be the same or different. For example, in FIG. 5B, the first PSSCH scheduled by using the first PSCCH is used for initial transmission, the second PSSCH is used for first retransmission, and the frequency domain location of the first PSSCH is different from the frequency domain location of the second PSSCH. In actual application, the frequency domain location of the first PSSCH may also be the same as the frequency domain location of the second PSSCH. For another example, in FIG. 5B, the first PSSCH scheduled by using the first PSCCH is used for initial transmission. In FIG. 5C, the first PSSCH scheduled by using the first PSCCH is used for initial retransmission. In FIG. 5B and FIG. 5C, that the first PSCCH is located on the subchannel 4 is used as an example. In actual application, the first PSCCH in FIG. 5B may be located on the subchannel 2, 3, or 4 of the subchannels 2 to 4, and the first PSCCH in FIG. 5C may be located on the subchannel 2, 3, or 4 of the subchannels 2 to 4.

If the first information is the frequency resource assignment field, a new field does not need to be introduced into the SCI. This is conducive to compatibility with a conventional technology.

2. The first information is a first field included in the SCI. For example, the first field is a field newly defined in the SCI in this embodiment of this application.

Optionally, a quantity of bits occupied by the first field may satisfy the following relationship:

$$T2 = \left\lceil \log_2 N_{subChannel}^{SL} \right\rceil \quad \text{(Formula 5)}$$

In Formula 5, T2 represents the quantity of bits occupied by the first field, and $N_{subchannel}^{SL}$ represents a quantity of subchannels included in each time domain unit in a resource pool of the first UE.

If the first information is the newly defined first field, an indication of the SCI for the starting frequency domain location of the first PSSCH may not be confused with other information of the SCI, so that the indication can be clearer.

Assuming that $N_{subchannel}^{SL} = 10$, if the first information is a frequency resource assignment field, when a value of sl-MaxNumPerReserve is 2, a quantity of bits occupied by the frequency resource assignment field is 8 bits (bits); or when a value of sl-MaxNumPerReserve is 3, a quantity of bits occupied by the frequency resource assignment field is 11 bits. Alternatively, in a case of $N_{subchannel}^{SL} = 10$, if the first information is the first field, because the first field and an existing frequency resource assignment field need to be combined to indicate the starting frequency domain location of the PSSCH, when the value of sl-MaxNumPerReserve is 2, the frequency resource assignment field and the first field occupy 10 bits in total; or when the value of sl-MaxNumPerReserve is 3, the frequency resource assignment field and the first field occupy 13 bits in total.

It can be learned that, if the first information is the frequency resource assignment field, in comparison with a case in which the first information is the first field, a quantity of bits of the first information can be reduced. In other words, the quantity of bits occupied by the frequency resource assignment field used as the first information may be less than the quantity of bits occupied by the first field.

In this embodiment of this application, the first information may indicate the starting frequency domain location of the first PSSCH. In other words, the receiver (for example, the second UE) may determine the starting frequency domain location of the first PSSCH based on the first information. Therefore, the starting frequency domain location of the first PSCCH may be the same as or different from that of the first PSSCH, so that distribution of the first PSCCH is more flexible. For example, the first PSCCH may occupy a subchannel with low interference, to reduce the adjacent-band cross-link interference or the adjacent-band self-interference on the second UE when the second UE receives the first PSCCH, and improve the transmission performance of the PSCCH.

The following describes another communication method provided in embodiments of this application. FIG. 6 is a flowchart of the method.

S601: A second UE sends first SL information to a first UE. Correspondingly, the first UE receives the first SL information from the second UE.

The first SL information may indicate a resource recommended for the first UE. For example, the first SL information includes second information, and the second information may indicate the resource recommended for the first UE. Optionally, the second information may indicate a first frequency domain location, a second frequency domain location, and a third frequency domain location. The first frequency domain location is a starting frequency domain location that is of a second PSSCH and that is recommended for the first UE, and the second PSSCH is scheduled by using a second PSCCH; the second frequency domain location is a starting frequency domain location that is of a third PSSCH and that is recommended for the first UE, and the third PSSCH is scheduled by using a third PSCCH; and the third frequency domain location is a starting frequency domain location that is of a fourth PSSCH and that is recommended for the first UE, and the fourth PSSCH is scheduled by using a fourth PSCCH. Optionally, the second PSSCH, the second PSCCH, the third PSSCH, the third PSCCH, the fourth PSSCH, and the fourth PSCCH may all be resources recommended by the second UE for the first UE. For example, the second information may further indicate a fourth frequency domain location, a fifth frequency domain location, and a sixth frequency domain location, where the fourth frequency domain location is a starting frequency domain location of the second PSCCH, the fifth frequency domain location is a starting frequency domain location of the third PSCCH, and the sixth frequency domain location is a starting frequency domain location of the fourth PSCCH. Three PSSCHs (or the three PSSCHs and corresponding three PSCCHs) are considered as one set of resources. For example, the second PSSCH, the second PSCCH, the third PSSCH, the third PSCCH, the fourth PSSCH, and the fourth PSCCH are one set of resources. The second UE may recommend one set of resources to the first UE by using the first SL information, or may recommend a plurality of sets of resources to the first UE. This is not specifically limited. For example, three PSSCHs included in one set of resources may be respectively used for initial transmission and two retransmissions of the first UE.

Optionally, the first SL information may be SCI, for example, SCI format (format) 2-C. Alternatively, the first SL information may be an SL MAC CE, or the first SL information may be other SL information, for example, a PC5-radio resource control (radio resource control, RRC) message. For example, if the second UE recommends one set of resources to the first UE by using the first SL information, the first SL information may be the SCI; or if the second UE recommends the plurality of sets of resources to the first UE by using the first SL information, a capacity of SCI may be insufficient, and therefore, the first SL information may be the SL MAC CE or the PC5 RRC message.

Optionally, the second information indicates a starting frequency domain location of a PSSCH. In an optional indication manner, the second information indicates an offset of a starting frequency domain location of a PSCCH for scheduling the PSSCH relative to the starting frequency domain location of the PSSCH. For example, in an indication manner in which the second information indicates the first frequency domain location, the second information may indicate an offset of the second PSCCH relative to the second PSSCH. Optionally, a unit of the offset indicated by the second information is, for example, a subchannel. For example, the offset is a quantity of subchannels spaced between the starting frequency domain location of the second PSCCH and the starting frequency domain location of the second PSSCH. Alternatively, a unit of the offset indicated by the second information may be an RB set, a PRB, or the like. For example, the offset is a quantity of RB sets or PRBs spaced between the starting frequency domain location of the second PSCCH and the starting frequency domain location of the second PSSCH. This is not specifically limited. The frequency domain location of the subchannel shown in FIG. 5A is still used as an example (in this case, descriptions of the subchannel occupied by the first UE in FIG. 5A may be ignored). For example, if the PSSCH in FIG. 5A is the second PSSCH, the starting frequency domain location of the second PSSCH is the subchannel 2, the PSCCH in FIG. 5A is the second PSCCH, and the starting frequency domain location of the second PSCCH is the subchannel 3, the offset may be 1.

Alternatively, the second information indicates a starting frequency domain location of a PSSCH. In another optional indication manner, the second information indicates an index or an identifier of the starting frequency domain location of the PSSCH. The frequency domain location of the subchannel shown in FIG. 5A is used as an example. For example, if the starting frequency domain location of the second PSSCH is the subchannel 2, the second information may include an index or an identifier of the subchannel 2.

It can be learned that, when recommending the resource, the second UE may indicate the starting frequency domain location of the PSSCH by using the second information. This is equivalent to that the starting frequency domain location of the PSSCH recommended by the second UE may be the same as or different from the starting frequency domain location of the PSCCH for scheduling the PSSCH. In other words, it is no longer required that the starting frequency domain location of the PSCCH sent by the UE is the same as that of the PSSCH sent by the UE, so that the UE schedules the PSCCH more flexibly. For example, the second PSSCH occupies at least one subchannel. If a quantity of the at least one subchannel is greater than or equal to 2, the second PSCCH is not necessarily located on a subchannel with a lowest frequency (that is, a start subchannel of the second PSSCH) in the at least one subchannel, but may be located on another subchannel in the at least one subchannel. For example, the second UE may determine, by using a resource sensing process, at least one subchannel with low interference, and the second PSSCH may occupy the at least one subchannel.

In addition, the second UE may further determine, by using the resource sensing process, a subchannel with least interference in the at least one subchannel (for example, a subchannel with least adjacent-band cross-link interference or a subchannel with least adjacent-band self-interference), and the second PSCCH may occupy the subchannel, so that the adjacent-band cross-link interference or the adjacent-band self-interference on a receiver (for example, the second UE) of the second PSCCH is low when the receiver receives the second PSCCH on the subchannel. This can improve transmission performance of the second PSCCH.

Based on the resource recommended by the second UE and/or a resource sensing result of the first UE, the first UE may determine the PSCCH and/or the PSSCH, or determine a frequency domain location (for example, the starting frequency domain location) of the PSCCH and/or a frequency domain location (for example, the starting frequency domain location) of the PSSCH. For example, the first UE determines the subchannel with low interference based on the resource recommended by the second UE and/or the resource sensing result of the first UE, to determine that the subchannel is a start subchannel of the PSCCH. Optionally, this embodiment of this application and the embodiment shown in FIG. 4 may be applied in combination. The first UE may determine the first PSSCH and/or the first PSCCH based on the resource indicated by the second information and/or based on the resource sensing result of the first UE. Alternatively, this embodiment of this application may not be combined with the embodiment shown in FIG. 4. For example, in the embodiment shown in FIG. 4, the first UE may determine the PSCCH and/or the PSSCH based on the resource sensing result of the first UE and/or the resource recommended by the second UE, but the second UE may not recommend the resource according to the method in this embodiment of this application.

The second information may be implemented in different manners, and the following provides examples for description.

1. The first SL information includes a frequency resource assignment field, and the frequency resource assignment field may be used as the second information.

According to a current solution, if the starting frequency domain location of the PSSCH is the same as the starting frequency domain location of the PSCCH, after the first UE sends the PSCCH and the PSSCH, the receiver UE can determine, through blind detection on the PSCCH, the frequency domain location of the PSSCH scheduled by using the PSCCH. Therefore, when recommending the resource to the first UE, the second UE may not need to indicate the starting frequency domain location of the PSSCH. However, in this embodiment of this application, it is not required that the starting frequency domain location of the PSSCH is the same as the starting frequency domain location of the PSCCH. Therefore, in this embodiment of this application, the frequency resource assignment field may further indicate the first frequency domain location, the second frequency domain location, and the third frequency domain location, so that the first UE can determine the starting frequency domain locations of the second PSSCH, the third PSSCH, and the fourth PSSCH based on the frequency resource assignment field, or determine frequency domain locations of the second PSSCH, the third PSSCH, and the fourth PSSCH based on the frequency resource assignment field (for example, the first UE can determine the starting frequency domain locations of the second PSSCH, the third PSSCH, and the fourth PSSCH based on the frequency resource assignment field, and then, with reference to the starting frequency domain locations of the second PSSCH, the third PSSCH, and the fourth PSSCH and quantities, indicated by the frequency resource assignment field, of subchannels occupied by the second PSSCH, the third PSSCH, and the fourth PSSCH in each time domain unit occupied by the second PSSCH, the third PSSCH, and the fourth PSSCH, the first UE can determine the frequency domain locations of the second PSSCH, the third PSSCH, and the fourth PSSCH, in other words, determine the subchannels respectively occupied by the second PSSCH, the third PSSCH, and the fourth PSSCH). This is equivalent to that a function of the frequency resource assignment field is extended in this embodiment of this application, so that the frequency resource assignment field can indicate more parameters.

Optionally, the frequency resource assignment field may further indicate a quantity of subchannels consecutively occupied by the second PSSCH in each time domain unit occupied by the second PSSCH, and/or indicate the fourth frequency domain location, the fifth frequency domain location, and the sixth frequency domain location. In a set of resources indicated by the first SL information, different PSSCHs may consecutively occupy an equal quantity of subchannels in one time domain unit. Therefore, that the frequency resource assignment field indicates the quantity of subchannels consecutively occupied by the second PSSCH in each time domain unit occupied by the second PSSCH is equivalent to that the frequency resource assignment field indicates a quantity of subchannels occupied by the second PSSCH in one time domain unit, a quantity of subchannels occupied by the third PSSCH in one time domain unit, and a quantity of subchannels occupied by the fourth PSSCH in one time domain unit. FIG. 7 is a diagram of a parameter indicated by a frequency resource assignment field. The frequency resource assignment field may indicate a quantity (for example, 3) of subchannels occupied by a second PSSCH in each time domain unit occupied by the second PSSCH, indicate a starting frequency domain location (for example, a subchannel 2 in FIG. 7) of the second PSSCH, a starting frequency domain location (for example, a subchannel 3 in FIG. 7) of a third PSSCH, and a starting frequency domain location (for example, a subchannel 1 in FIG. 7) of a fourth PSSCH, and indicate a starting frequency domain location (for example, a subchannel 4 in FIG. 7) of a second PSCCH, a starting frequency domain location (for example, the subchannel 4 in FIG. 7) of a third PSCCH, and a starting frequency domain location (for example, the subchannel 2 in FIG. 7) of a fourth PSCCH.

Optionally, a quantity of bits occupied by the frequency resource assignment field may satisfy the following relationship:

$$T3 = \left\lceil log_2 \frac{N_{subChannel}^{SL}(N_{subChannel}^{SL}+1)^2(N_{subChannel}^{SL}+2)\left({N_{subChannel}^{SL}}^2+2N_{subChannel}^{SL}+2\right)}{60} \right\rceil$$

(Formula 6)

In Formula 6, T3 represents the quantity of bits occupied by the frequency resource assignment field. $\lceil x \rceil$ represents rounding up $x$. $N_{subchannel}^{SL}$ represents a quantity of subchannels included in each time domain unit in a resource pool, and the resource pool is a resource pool of the first UE.

Optionally, a value of the frequency resource assignment field (that is, an FRIV of the frequency resource assignment field) may satisfy the following relationship:

$$V = n_{subCH,1}^{start} + n_{subCH,2}^{start} \cdot (N_{subchannel}^{SL} + 1 - L_{subCH}) + n_{PSCCH,0}^{shift} \cdot (N_{subchannel}^{SL} + 1 - L_{subCH})^2 + n_{PSCCH,1}^{shift} \cdot L_{subCH} \cdot (N_{subchannel}^{SL} + 1 - L_{subCH})^2 + n_{PSCCH,2}^{shift} \cdot L_{subCH}^2 \cdot (N_{subchannel}^{SL} + 1 - L_{subCH})^2 + \sum_{i=1}^{L_{subCH}-1} i^3 \cdot (N_{subchannel}^{SL} + 1 - i)^2 \quad \text{(Formula 7)}$$

In Formula 7, V represents the value of the frequency resource assignment field. If a value of a parameter sl-MaxNumPerReserve is 3, it indicates that the first SL information indicates three resources in total. The three resources include, for example, the second PSSCH, the third PSSCH, and the fourth PSSCH. $n_{subCH,1}^{start}$ may represent a starting frequency domain location, namely, a second frequency domain location, of a 2nd resource (namely, the third PSSCH) indicated by the first SL information. $n_{subCH,2}^{start}$ may represent a starting frequency domain location, namely, a third frequency domain location, of a 3rd resource (namely, the fourth PSSCH) indicated by the first SL information. FIG. 7 is used as an example. For example, the first SL information indicates the second PSSCH, the third PSSCH, and the fourth PSSCH. $n_{subCH,1}^{start}$ may represent the starting frequency domain location of the third PSSCH. For example, $n_{subCH,1}^{start}$ represents an index or an identifier of a start subchannel of the third PSSCH. For example, the start subchannel is the subchannel 3 in FIG. 7. $n_{subCH,2}^{start}$ may represent the starting frequency domain location of the fourth PSSCH. For example, $n_{subCH,2}^{start}$ represents an index or an identifier of a start subchannel of the fourth PSSCH. For example, the start subchannel is the subchannel 1 in FIG. 7. $n_{PSCCH,0}^{shift}$ represents an offset of the starting frequency domain location of the second PSCCH relative to the first frequency domain location. For example, in FIG. 7, if the second PSCCH is located on the subchannel 4, and the start subchannel of the second PSSCH is the subchannel 2, $n_{PSCCH,0}^{shift}$ may be equal to 2. $n_{PSCCH,1}^{shift}$ represents an offset of the starting frequency domain location of the third PSCCH relative to the second frequency domain location. For example, in FIG. 7, if the third PSCCH is located on the subchannel 4, and the start subchannel of the third PSSCH is the subchannel 3, $n_{PSCCH,1}^{shift}$ may be equal to 1. $n_{PSCCH,2}^{shift}$ represents an offset of the starting frequency domain location of the fourth PSCCH relative to the third frequency domain location. For example, in FIG. 7, if the fourth PSCCH is located on the subchannel 3, and the start subchannel of the fourth PSSCH is the subchannel 1, $n_{PSCCH,2}^{shift}$ may be equal to 2. $L_{subCH}$ represents a quantity of subchannels consecutively occupied by the second PSSCH in each time domain unit occupied by the second PSSCH. For example, in FIG. 7, $L_{subCH}$ may be equal to 3.

In addition, subchannels on which different PSSCHs recommended by the second UE are located may be the same or different, and subchannels on which different PSCCHs recommended by the second UE are located may be the same or different. For example, in FIG. 7, a frequency domain location of the second PSSCH is different from a frequency domain location of the third PSSCH. In actual application, the frequency domain location of the second PSSCH may alternatively be the same as the frequency domain location of the third PSSCH. For another example, in FIG. 7, a frequency domain location of the second PSCCH is the same as a frequency domain location of the third PSCCH. In actual application, the frequency domain location of the second PSCCH may alternatively be different from the frequency domain location of the third PSCCH.

Optionally, the FRIV of the frequency resource assignment field may be related to the parameter sl-MaxNum-PerReserve. For descriptions of the parameter sl-MaxNumPerReserve, refer to the embodiment shown in FIG. 4. For example, when the value of the parameter sl-MaxNumPerReserve is 3, the foregoing Formula 6 and/or Formula 7 may be used. Alternatively, it may be considered that the FRIV of the frequency resource assignment field is irrelevant to the parameter sl-MaxNumPerReserve. In other words, the foregoing Formula 6 and Formula 7 do not depend on the value of the parameter sl-MaxNumPerReserve.

An example in which the first SL information is SCI is used, and the SCI may originally include the frequency resource assignment field. Therefore, if the second information is the frequency resource assignment field, a new field does not need to be introduced into the first SL information as the second information. This is conducive to compatibility with a conventional technology.

2. The second information is a second field included in the first SL information. For example, the second field is a field newly defined in the first SL information in this embodiment of this application.

Optionally, a quantity of bits occupied by the second field may satisfy the following relationship:

$$T4 = 3 \times \left\lceil \log_2 N_{subChannel}^{SL} \right\rceil \quad (\text{Formula 8})$$

In Formula 8, T4 represents the quantity of bits occupied by the second field, and $N_{subchannel}^{SL}$ represents a quantity of subchannels included in each time domain unit in a resource pool of the first UE.

If the second information is the newly defined second field, an indication of the first SL information for the recommended resource may not be confused with other information of the SL information, so that the indication can be clearer.

Optionally, if the second information is the frequency resource assignment field, in comparison with a case in which the second information is the second field, a quantity of bits of the second information can be reduced. In other words, the quantity of bits occupied by the frequency resource assignment field used as the second information may be less than the quantity of bits occupied by the second field.

In this embodiment of this application, the second information may indicate the starting frequency domain location of the recommended PSSCH. Therefore, the starting frequency domain location of the PSCCH may be the same as or different from that of the PSSCH, so that distribution of the PSCCH is more flexible. For example, the PSCCH may occupy a subchannel with low interference, to reduce the adjacent-band cross-link interference or the adjacent-band self-interference on the receiver when the receiver receives the PSCCH, and improve the transmission performance of the PSCCH.

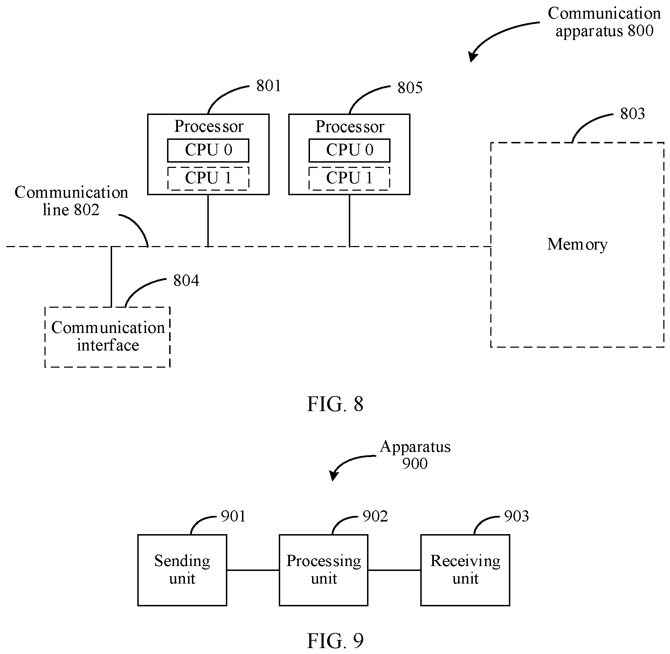

FIG. 8 is a diagram of a structure of a communication apparatus according to an embodiment of this application. The communication apparatus 800 may be the first UE in the embodiment shown in FIG. 4 or FIG. 6 or a circuit system of the first UE, and is configured to implement the method corresponding to the first UE in the foregoing method embodiment. Alternatively, the communication apparatus 800 may be the second UE in the embodiment shown in FIG. 4 or FIG. 6 or a circuit system of the second UE, and is configured to implement the method corresponding to the second UE in the foregoing method embodiment. For specific functions, refer to the descriptions of the foregoing method embodiments. For example, a circuit system is a chip system.

The communication apparatus 800 includes at least one processor 801. The processor 801 may be configured to perform internal processing of the apparatus, to implement a specific control processing function. Optionally, the processor 801 includes instructions. Optionally, the processor 801 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 800 includes one or more memories 803, configured to store instructions. Optionally, the memory 803 may further store data. The processor and the memory may be separately disposed, or may be integrated together.

Optionally, the communication apparatus 800 includes a communication line 802 and at least one communication interface 804. Because the memory 803, the communication line 802, and the communication interface 804 are all optional, the memory 803, the communication line 802, and the communication interface 804 are all represented by dashed lines in FIG. 8.

Optionally, the communication apparatus 800 may further include a transceiver and/or an antenna. The transceiver may be configured to: send information to another apparatus or receive information from another apparatus. The transceiver may be referred to as a transceiver machine, a transceiver circuit, an input/output interface, or the like, and is configured to implement a transceiver function of the communication apparatus 800 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 801 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 802 may include a path and transfers information between the foregoing components.

The communication interface 804 is configured to communicate, by using any apparatus such as a transceiver, with another device or a communication network, for example, an ethernet, a radio access network (radio access network, RAN), a wireless local area network (wireless local area network, WLAN), or a wired access network.

The memory 803 may be a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disk storage (including a compact disc, a laser disc, an optical disc, a digital versatile disc, a Blu-ray disc, and the like), a magnetic disk storage medium or another magnetic storage device, or any other medium that can be used to carry or store expected program code in an instruction or data structure form and that can be accessed by a computer, but is not limited thereto. The memory 803 may exist independently, and is connected to the processor 801 through the communication line 802. Alternatively, the memory 803 may be integrated with the processor 801.

The memory 803 is configured to store computer-executable instructions for executing the solutions of this application, and the processor 801 controls execution of the computer-executable instructions. The processor 801 is configured to execute the computer-executable instructions stored in the memory 803, to implement the steps performed by the first UE in the embodiment shown in FIG. 4 or FIG. 6, or implement the steps performed by the second UE in the embodiment shown in FIG. 4 or FIG. 6.

Optionally, the computer-executable instructions in this embodiment of this application may also be referred to as application program code. This is not specifically limited in this embodiment of this application.

In a specific implementation, in an embodiment, the processor 801 may include one or more CPUs, for example, a CPU 0 and a CPU 1 shown in FIG. 8.

In a specific implementation, in an embodiment, the communication apparatus 800 may include a plurality of processors, for example, the processor 801 and a processor 805 in FIG. 8. Each of the processors may be a single-core processor (single-CPU), or may be a multi-core processor (multi-CPU). The processor herein may be one or more devices, circuits, and/or processing cores configured to process data (for example, computer program instructions).

When the apparatus shown in FIG. 8 is a chip, for example, a chip of the first UE or a chip of the second UE, the chip includes the processor 801 (which may further include the processor 805), the communication line 802, and the communication interface 804. Optionally, the chip may include the memory 803. Specifically, the communication interface 804 may be an input interface, a pin, a circuit, or the like. The memory 803 may be a register, a buffer, or the like. The processor 801 and the processor 805 may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. For example, when division into functional modules is performed based on corresponding functions, FIG. 9 is a diagram of an apparatus. The apparatus 900 may be the first UE or the second UE in the foregoing method embodiments, or a chip in the first UE or a chip in the second UE. The apparatus 900 includes a sending unit 901, a processing unit 902, and a receiving unit 903.

It should be understood that the apparatus 900 may be configured to implement the steps performed by the first UE or the second UE in the communication method in embodiments of this application. For related features, refer to any one of embodiments shown in FIG. 4 or FIG. 6. Details are not described herein again.

Optionally, functions/implementation processes of the sending unit 901, the receiving unit 903, and the processing unit 902 in FIG. 9 may be implemented by the processor 801 in FIG. 8 by invoking the computer-executable instructions stored in the memory 803. Alternatively, functions/implementation processes of the processing unit 902 in FIG. 9 may be implemented by the processor 801 in FIG. 8 by invoking the computer-executable instructions stored in the memory 803, and functions/implementation processes of the sending unit 901 and the receiving unit 903 in FIG. 9 may be implemented by the communication interface 804 in FIG. 8.

Optionally, when the apparatus 900 is a chip or a circuit, the functions/implementation processes of the sending unit 901 and the receiving unit 903 may alternatively be implemented by a pin, a circuit, or the like.

This application further provides a computer-readable storage medium. The computer-readable storage medium stores a computer program or instructions. When the computer program or the instructions are run, the method performed by the first UE or the second UE in the foregoing method embodiments is implemented. In this way, the functions in the foregoing embodiments may be implemented in a form of a software functional unit and sold or used as an independent product. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first UE or the second UE in any one of the foregoing method embodiments.

An embodiment of this application further provides a processing apparatus, including a processor and an interface. The processor is configured to perform the method performed by the first UE or the second UE in any one of the foregoing method embodiments.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, (solid-state disk, SSD)), or the like.

Various illustrative logic units and circuits described in embodiments of this application may implement or operate the described functions by a general-purpose processor, a digital signal processor (digital signal processor, DSP), an ASIC, a field-programmable gate array (field-programmable gate array, FPGA) or another programmable logic apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to a processor, so that the processor may read information from the storage medium and write information to the storage medium. Optionally, the storage medium may further be integrated into a processor. The processor and the storage medium may be disposed in an ASIC, and the ASIC may be disposed in a terminal device. Optionally, the processor and the storage medium may alternatively be disposed in different components of a terminal device.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

Mutual reference may be made to content in embodiments of this application. Unless otherwise specified or s logical conflict occurs, terms and/or descriptions in different embodiments are consistent and may be mutually referenced, and technical features in different embodiments may be combined into a new embodiment based on an internal logical relationship between the technical features.

It may be understood that in embodiments of this application, the first UE or the second UE may perform a part or all of the steps in embodiments of this application. The steps or operations are merely examples. In embodiments of this application, other operations or variations of various operations may be further performed. In addition, the steps may be performed in a sequence different from a sequence presented in embodiments of this application, and not all the operations in embodiments of this application may be performed.

**Claims**

1.  A communication method, applied to a first terminal device, wherein the method comprises:

    sending sidelink control information, wherein the sidelink control information comprises first information, and the first information indicates a starting frequency domain location of a first sidelink shared channel, and the first sidelink shared channel is scheduled by using the sidelink control information.

2.  The method according to claim 1, wherein the sidelink control information comprises a frequency resource assignment field, and the first information is the frequency resource assignment field.

3.  The method according to claim 2, wherein

    when a value of a parameter maximum number per reservation for sidelink is 2, a quantity of bits occupied by the frequency resource assignment field satisfies the following relationship:

$$\mathrm{T1}=\left\lceil \log_2 \frac{N^{SL}_{subChannel} \cdot (N^{SL}_{subChannel}+1) \cdot (N^{SL}_{subChannel}+2)}{6} \right\rceil, \text{ wherein}$$

    T1 represents the quantity of bits occupied by the frequency resource assignment field, $N^{SL}_{subchannel}$ represents a quantity of subchannels comprised in each time domain unit in a resource pool, and $\lceil x \rceil$ represents rounding up $x$.

4.  The method according to claim 3, wherein when the value of the parameter maximum number per reservation for sidelink is 2, a value of the frequency resource assignment field satisfies the following relationship:

$$\mathrm{V}= n^{start}_{subCH,1} + n^{shift}_{PSCCH} \cdot (N^{SL}_{subchannel} + 1 - L_{subCH}) + \sum_{i=1}^{L_{subCH}-1} i \cdot (N^{SL}_{subchannel} + 1 - i),$$

    wherein

    V represents the value of the frequency resource assignment field, $n^{start}_{subCH,1}$ represents a starting frequency domain location of a 1st reserved resource indicated by the sidelink control information, $n^{shift}_{PSCCH}$ represents an offset of a starting frequency domain location of a first sidelink control channel relative to the starting frequency domain location of the first sidelink shared channel, the first sidelink control channel is used for carrying the sidelink control information, $L_{subCH}$ represents a quantity of subchannels consecutively occupied by the first sidelink shared channel in each time domain unit occupied by the first sidelink shared channel, and $\lceil x \rceil$ represents rounding up $x$.

5.  The method according to claim 2, wherein

    when a value of a parameter maximum number per reservation for sidelink is 3, a quantity of bits occupied by the frequency resource assignment field satisfies the following relationship:

$$T1=\left\lceil \log_2 \frac{N^{SL}_{subChannel} \cdot \left(N^{SL}_{subChannel}+1\right)^2 \cdot \left(N^{SL}_{subChannel}+2\right)}{12} \right\rceil,$$

wherein

T1 represents the quantity of bits occupied by the frequency resource assignment field, $N^{SL}_{subchannel}$ represents a quantity of subchannels comprised in each time domain unit in a resource pool, and $\lceil x \rceil$ represents rounding up *x*.

6. The method according to claim 5, wherein when the value of the parameter maximum number per reservation for sidelink is 3, a value of the frequency resource assignment field satisfies the following relationship:

$$V= \quad n^{start}_{subCH,1} + n^{start}_{subCH,2} \cdot (N^{SL}_{subchannel} + 1 - L_{subCH}) + n^{shift}_{PSCCH} \cdot (N^{SL}_{subchannel} + 1 -$$

$$L_{subCH})^2 + \sum_{i=1}^{L_{subCH}-1} i \cdot (N^{SL}_{subchannel} + 1 - i)^2, \text{ wherein}$$

V represents the value of the frequency resource assignment field, $n^{start}_{subCH,1}$ represents a starting frequency domain location of a 1st reserved resource indicated by the sidelink control information, $n^{start}_{subCH,2}$ represents a starting frequency domain location of a 2nd reserved resource indicated by the sidelink control information, $n^{shift}_{PSCCH}$ represents an offset of a starting frequency domain location of a first sidelink control channel relative to the starting frequency domain location of the first sidelink shared channel, the first sidelink control channel is used for carrying the sidelink control information, $L_{subCH}$ represents a quantity of subchannels consecutively occupied by the first sidelink shared channel in each time domain unit occupied by the first sidelink shared channel, and $\lceil x \rceil$ represents rounding up *x*.

7. The method according to claim 1, wherein the sidelink control information comprises a first field, and the first information is the first field.

8. The method according to claim 7, wherein a quantity of bits occupied by the first field satisfies the following relationship:

$$T2=\left\lceil \log_2 N^{SL}_{subChannel} \right\rceil,$$

wherein

T2 represents the quantity of bits occupied by the first field, $N^{SL}_{subchannel}$ represents a quantity of subchannels comprised in each time domain unit in a resource pool, and $\lceil x \rceil$ represents rounding up *x*.

9. The method according to any one of claims 1 to 8, wherein the first sidelink shared channel occupies at least one subchannel, and when a quantity of the at least one subchannel is greater than or equal to 2, the first sidelink control channel occupies a first subchannel in the at least one subchannel, wherein the first subchannel is a subchannel with lowest interference in the at least one subchannel, and the first sidelink control channel is used for carrying the sidelink control information.

10. The method according to any one of claims 1 to 9, wherein the method further comprises:

receiving first sidelink information from a second terminal device, wherein the first sidelink information indicates a resource recommended for the first terminal device; and
determining the starting frequency domain location of the first sidelink shared channel and/or the starting frequency domain location of the first sidelink control channel based on the first sidelink information, wherein the first sidelink control channel is used for carrying the sidelink control information.

11. A communication method, applied to a second terminal device, wherein the method comprises:

sending first sidelink information to a first terminal device, wherein the first sidelink information comprises second information, and the second information indicates a first frequency domain location, a second frequency domain location, and a third frequency domain location, wherein

the first frequency domain location is a starting frequency domain location that is of a second sidelink shared channel and that is recommended for the first terminal device, and the second sidelink shared channel is scheduled by using a second sidelink control channel;

the second frequency domain location is a starting frequency domain location that is of a third sidelink shared channel and that is recommended for the first terminal device, and the third sidelink shared channel is scheduled by using a third sidelink control channel; and

the third frequency domain location is a starting frequency domain location that is of a fourth sidelink shared channel and that is recommended for the first terminal device, and the fourth sidelink shared channel is scheduled by using a fourth sidelink control channel.

12. The method according to claim 11, wherein the first sidelink information comprises a frequency resource assignment field, and the second information is the frequency resource assignment field.

13. The method according to claim 12, wherein a quantity of bits occupied by the frequency resource assignment field satisfies the following relationship:

$$T3=\left\lceil \log_2 \frac{N^{SL}_{subChannel}\cdot\left(N^{SL}_{subChannel}+1\right)^2\cdot\left(N^{SL}_{subChannel}+2\right)\cdot\left({N^{SL}_{subChannel}}^2+2N^{SL}_{subChannel}+2\right)}{60}\right\rceil,$$

wherein

T3 represents the quantity of bits occupied by the frequency resource assignment field, $N^{SL}_{subchannel}$ represents a quantity of subchannels comprised in each time domain unit in a resource pool, and $\lceil x \rceil$ represents rounding up *x*.

14. The method according to claim 13, wherein a value of the frequency resource assignment field satisfies the following relationship:

$$V= \quad n^{start}_{subCH,1} + n^{start}_{subCH,2} \cdot (N^{SL}_{subchannel} + 1 - L_{subCH}) + n^{shift}_{PSCCH,0} \cdot (N^{SL}_{subchannel} + 1 -$$

$$L_{subCH})^2 + n^{shift}_{PSCCH,1} \cdot L_{subCH} \cdot (N^{SL}_{subchannel} + 1 - L_{subCH})^2 + n^{shift}_{PSCCH,2} \cdot L^2_{subCH} \cdot$$

$$(N^{SL}_{subchannel} + 1 - L_{subCH})^2 + \sum_{i=1}^{L_{subCH}-1} i^3 \cdot (N^{SL}_{subchannel} + 1 - i)^2,$$

wherein

V represents the value of the frequency resource assignment field, $n^{start}_{subCH,1}$ represents the second frequency domain location, $n^{start}_{subCH,2}$ represents the third frequency domain location, $n^{shift}_{PSCCH,0}$ represents an offset of a starting frequency domain location of the second sidelink control channel relative to the first frequency domain location, $n^{shift}_{PSCCH,1}$ represents an offset of a starting frequency domain location of the third sidelink control channel relative to the second frequency domain location, $n^{shift}_{PSCCH,2}$ represents an offset of a starting frequency domain location of the fourth sidelink control channel relative to the third frequency domain location, $L_{subCH}$ represents a quantity of subchannels consecutively occupied by the second sidelink shared channel in each time domain unit occupied by the second sidelink shared channel, and $\lceil x \rceil$ represents rounding up x.

**15.** The method according to claim 11, wherein the first sidelink information comprises a second field, and the second information is the second field.

**16.** The method according to claim 15, wherein a quantity of bits occupied by the second field satisfies the following relationship:

$$T4 = 3 \times \left\lceil \log_2 N_{subChannel}^{SL} \right\rceil,$$

wherein

T4 represents the quantity of bits occupied by the second field, $N_{subchannel}^{SL}$ represents a quantity of subchannels comprised in each time domain unit in a resource pool, and $\lceil x \rceil$ represents rounding up $x$.

**17.** The method according to any one of claims 11 to 16, wherein the second sidelink shared channel occupies at least one subchannel, and when a quantity of the at least one subchannel is greater than or equal to 2, the second sidelink control channel occupies a second subchannel in the at least one subchannel, wherein the second subchannel is a subchannel with lowest interference in the at least one subchannel.

**18.** The method according to any one of claims 11 to 17, wherein the first sidelink information is sidelink control information or a media access control MAC control element CE.

**19.** A communication method, applied to a second terminal device, wherein the method comprises:

receiving sidelink control information from a first terminal device; and
determining a starting frequency domain location of a first sidelink shared channel based on first information comprised in the sidelink control information, and detecting, based on the starting frequency domain location, the first sidelink shared channel scheduled by using the sidelink control information.

**20.** The method according to claim 19, wherein the sidelink control information comprises a frequency resource assignment field, and the first information is the frequency resource assignment field.

**21.** The method according to claim 20, wherein

when a value of a parameter maximum number per reservation for sidelink is 2, a quantity of bits occupied by the frequency resource assignment field satisfies the following relationship:

$$T1 = \left\lceil \log_2 \frac{N_{subChannel}^{SL} \cdot \left( N_{subChannel}^{SL} + 1 \right) \cdot \left( N_{subChannel}^{SL} + 2 \right)}{6} \right\rceil,$$

wherein

T1 represents the quantity of bits occupied by the frequency resource assignment field, $N_{subchannel}^{SL}$ represents a quantity of subchannels comprised in each time domain unit in a resource pool, and $\lceil x \rceil$ represents rounding up $x$.

**22.** The method according to claim 21, wherein when the value of the parameter maximum number per reservation for sidelink is 2, a value of the frequency resource assignment field satisfies the following relationship:

$$V = n_{subCH,1}^{start} + n_{PSCCH}^{shift} \cdot \left( N_{subchannel}^{SL} + 1 - L_{subCH} \right) + \sum_{i=1}^{L_{subCH}-1} i \cdot \left( N_{subchannel}^{SL} + 1 - i \right),$$

wherein

V represents the value of the frequency resource assignment field, $n_{subCH,1}^{start}$ represents a starting frequency domain location of a 1st reserved resource indicated by the sidelink control information, $n_{PSCCH}^{shift}$ represents an offset of a starting frequency domain location of a first sidelink control channel relative to the starting frequency domain location of the first sidelink shared channel, the first sidelink control channel is used for carrying the sidelink control information, $L_{subCH}$ represents a quantity of subchannels consecutively occupied by the first sidelink shared channel in each time domain unit occupied by the first sidelink shared channel, and $\lceil x \rceil$ represents rounding up $x$.

23. The method according to any one of claims 20 to 22, wherein

when a value of a parameter maximum number per reservation for sidelink is 3, a quantity of bits occupied by the frequency resource assignment field satisfies the following relationship:

$$T1 = \left\lceil \log_2 \frac{N_{subChannel}^{SL} \cdot \left(N_{subChannel}^{SL}+1\right)^2 \cdot \left(N_{subChannel}^{SL}+2\right)}{12} \right\rceil,$$

wherein

T1 represents the quantity of bits occupied by the frequency resource assignment field, $N_{subchannel}^{SL}$ represents a quantity of subchannels comprised in each time domain unit in a resource pool, and $\lceil x \rceil$ represents rounding up $x$.

24. The method according to claim 23, wherein when the value of the parameter maximum number per reservation for sidelink is 3, a value of the frequency resource assignment field satisfies the following relationship:

$$V = n_{subCH,1}^{start} + n_{subCH,2}^{start} \cdot (N_{subchannel}^{SL} + 1 - L_{subCH}) + n_{PSCCH}^{shift} \cdot (N_{subchannel}^{SL} + 1 - L_{subCH})^2 + \sum_{i=1}^{L_{subCH}-1} i \cdot (N_{subchannel}^{SL} + 1 - i)^2,$$

wherein

V represents the value of the frequency resource assignment field, $n_{subCH,1}^{start}$ represents a starting frequency domain location of a 1st reserved resource indicated by the sidelink control information, $n_{subCH,2}^{start}$ represents a starting frequency domain location of a 2nd reserved resource indicated by the sidelink control information, $n_{PSCCH}^{shift}$ represents an offset of a starting frequency domain location of a first sidelink control channel relative to the starting frequency domain location of the first sidelink shared channel, the first sidelink control channel is used for carrying the sidelink control information, $L_{subCH}$ represents a quantity of subchannels consecutively occupied by the first sidelink shared channel in each time domain unit occupied by the first sidelink shared channel, and $\lceil x \rceil$ represents rounding up $x$.

25. The method according to claim 19, wherein the sidelink control information comprises a first field, and the first information is the first field.

26. The method according to claim 25, wherein a quantity of bits occupied by the first field satisfies the following relationship:

$$T2 = \left\lceil \log_2 N_{subChannel}^{SL} \right\rceil,$$

wherein

T2 represents the quantity of bits occupied by the first field, $N_{subchannel}^{SL}$ represents a quantity of subchannels comprised in each time domain unit in a resource pool, and $\lceil x \rceil$ represents rounding up $x$.

27. The method according to any one of claims 19 to 26, wherein the first sidelink shared channel occupies at least one subchannel, and when a quantity of the at least one subchannel is greater than or equal to 2, the first sidelink control channel occupies a first subchannel in the at least one subchannel, wherein the first subchannel is a subchannel with lowest interference in the at least one subchannel, and the first sidelink control channel is used for carrying the sidelink control information.

28. The method according to any one of claims 19 to 27, wherein the method further comprises:
sending first sidelink information to the first terminal device, wherein the first sidelink information indicates a resource recommended for the first terminal device.

29. A communication method, applied to a first terminal device, wherein the method comprises:

receiving first sidelink information from a second terminal device, wherein the first sidelink information comprises second information, and the second information indicates a first frequency domain location, a second frequency domain location, and a third frequency domain location, wherein
the first frequency domain location is a starting frequency domain location that is of a second sidelink shared channel and that is recommended for the first terminal device, and the second sidelink shared channel is scheduled by using a second sidelink control channel;
the second frequency domain location is a starting frequency domain location that is of a third sidelink shared channel and that is recommended for the first terminal device, and the third sidelink shared channel is scheduled by using a third sidelink control channel; and
the third frequency domain location is a starting frequency domain location that is of a fourth sidelink shared channel and that is recommended for the first terminal device, and the fourth sidelink shared channel is scheduled by using a fourth sidelink control channel.

30. The method according to claim 29, wherein the first sidelink information comprises a frequency resource assignment field, and the second information is the frequency resource assignment field.

31. The method according to claim 30, wherein a quantity of bits occupied by the frequency resource assignment field satisfies the following relationship:

$$T3=\left\lceil log_2 \frac{N_{subChannel}^{SL}\cdot\left(N_{subChannel}^{SL}+1\right)^2\cdot\left(N_{subChannel}^{SL}+2\right)\cdot\left(N_{subChannel}^{SL}{}^2+2N_{subChannel}^{SL}+2\right)}{60}\right\rceil,$$

wherein

T3 represents the quantity of bits occupied by the frequency resource assignment field, $N_{subchannel}^{SL}$ represents a quantity of subchannels comprised in each time domain unit in a resource pool, and $\lceil x \rceil$ represents rounding up *x*.

32. The method according to claim 31, wherein a value of the frequency resource assignment field satisfies the following relationship:

$$V= n_{subCH,1}^{start} + n_{subCH,2}^{start} \cdot (N_{subchannel}^{SL} + 1 - L_{subCH}) + n_{PSCCH,0}^{shift} \cdot (N_{subchannel}^{SL} + 1 -$$
$$L_{subCH})^2 + n_{PSCCH,1}^{shift} \cdot L_{subCH} \cdot (N_{subchannel}^{SL} + 1 - L_{subCH})^2 + n_{PSCCH,2}^{shift} \cdot L_{subCH}^2 \cdot$$
$$(N_{subchannel}^{SL} + 1 - L_{subCH})^2 + \sum_{i=1}^{L_{subCH}-1} i^3 \cdot (N_{subchannel}^{SL} + 1 - i)^2, \text{wherein}$$

V represents the value of the frequency resource assignment field, $n_{subCH,1}^{start}$ represents the second frequency domain location, $n_{subCH,2}^{start}$ represents the third frequency domain location, $n_{PSCCH,0}^{shift}$ represents an offset of a starting frequency domain location of the second sidelink control channel relative to the first frequency domain location, $n_{PSCCH,1}^{shift}$ represents an offset of a starting frequency domain location of the third sidelink control channel relative to the second frequency domain location, $n_{PSCCH,2}^{shift}$ represents an offset of a starting frequency domain location of the fourth sidelink control channel relative to the third frequency domain location, $L_{subCH}$ represents a quantity of subchannels consecutively occupied by the second sidelink shared channel in each time domain unit occupied by the second sidelink shared channel, and $\lceil x \rceil$ represents rounding up x.

33. The method according to claim 29, wherein the first sidelink information comprises a second field, and the second information is the second field.

34. The method according to claim 33, wherein a quantity of bits occupied by the second field satisfies the following relationship:

$$\text{T4} = 3 \times \lceil \log_2 N_{subChannel}^{SL} \rceil,$$

wherein

T4 represents the quantity of bits occupied by the second field, $N_{subchannel}^{SL}$ represents a quantity of subchannels comprised in each time domain unit in a resource pool, and $\lceil x \rceil$ represents rounding up *x*.

35. The method according to any one of claims 29 to 34, wherein the second sidelink shared channel occupies at least one subchannel, and when a quantity of the at least one subchannel is greater than or equal to 2, the second sidelink control channel occupies a second subchannel in the at least one subchannel, wherein the second subchannel is a subchannel with lowest interference in the at least one subchannel.

36. The method according to any one of claims 29 to 35, wherein the first sidelink information is sidelink control information or a MAC CE.

37. A communication apparatus, comprising a processor and a memory, wherein the memory is coupled to the processor, and the processor is configured to perform the method according to any one of claims 1 to 10, the method according to any one of claims 11 to 18, the method according to any one of claims 19 to 28, or the method according to any one of claims 29 to 36.

38. A computer-readable storage medium, wherein the computer-readable storage medium is configured to store a computer program, and when the computer program is run on a computer, the computer is enabled to perform the method according to any one of claims 1 to 10, the computer is enabled to perform the method according to any one of claims 11 to 18, the computer is enabled to perform the method according to any one of claims 19 to 28, or the computer is enabled to perform the method according to any one of claims 29 to 36.

39. A chip system, wherein the chip system comprises:
a processor and an interface, wherein the processor is configured to invoke instructions from the interface and run the instructions, and when the processor executes the instructions, the method according to any one of claims 1 to 10 is implemented, the method according to any one of claims 11 to 18 is implemented, the method according to any one of claims 19 to 28 is implemented, or the method according to any one of claims 29 to 36 is implemented.

40. A computer program product, wherein the computer program product comprises a computer program, and when the computer program is run on a computer, the computer is enabled to perform the method according to any one of claims 1 to 10, the computer is enabled to perform the method according to any one of claims 11 to 18, the computer is enabled to perform the method according to any one of claims 19 to 28, or the computer is enabled to perform the method according to any one of claims 29 to 36.

EP 4 608 037 A1

UE 1

UE 2 - - -> UE 3

Frequency

UE 1 ——> UE 3

Occupy — Subchannel 3

Occupy Subchannel 2

UE 2 ——> UE X —— Subchannel 1
Occupy

PSSCH

PSCCH | PSSCH

PSCCH | PSSCH

Time

—————> Data transmission

- - - -> Adjacent-band cross-link
interference

FIG. 1A

Subchannel 4

Subchannel 3

Subchannel 2

Subchannel 1

PRB

OFDM symbol

Slot

| ▨ AGC of a UE 2 | ⊟ PSCCH of the UE 2 | ⊞ PSSCH of the UE 2 |
| ⫿ AGC of a UE 1 | ⊠ PSCCH of the UE 1 | ⧄ PSSCH of the UE 1 |

FIG. 1B

FIG. 2

EP 4 608 037 A1

UE 1

UE 2 – – – – – – – – – → UE 3

——→ Data transmission

– – –→ Adjacent-band cross-link interference

FIG. 3A

UE 1

UE 2

——→ Data transmission

– – – –→ Adjacent-band self-interference

FIG. 3B

First UE                                           Second UE

S401: SCI (including first information, where the first information indicates a starting frequency domain location of a first PSSCH)

FIG. 4

FIG. 5A

FIG. 5B

Subchannel 6

Subchannel 5

Subchannel 4

Subchannel 3

Subchannel 2

Subchannel 1

First
PSSCH

Offset

Fourth
PSSCH

▨ First PSCCH

FIG. 5C

First UE

Second UE

S601: First SL information (including second information, where the second information indicates starting frequency domain locations of a first PSSCH, a second PSSCH, and a third PSSCH)

FIG. 6

Subchannel 6

Subchannel 5

Subchannel 4

Subchannel 3

Subchannel 2

Subchannel 1

Second
PSSCH

Third
PSSCH

Fourth
PSSCH

▨ Second
PSCCH

▭ Third
PSCCH

▥ Fourth
PSCCH

FIG. 7

Communication
apparatus 800

801                    805                                     803

Procesor            Procesor

CPU 0               CPU 0

CPU 1               CPU 1

Communication
line 802

Memory

804

Communication
interface

FIG. 8

Apparatus
900

901                 902                 903

Sending            Processing          Receiving
unit               unit                unit

FIG. 9

## INTERNATIONAL SEARCH REPORT

| International application No. |
| --- |
| **PCT/CN2024/070294** |

### A. CLASSIFICATION OF SUBJECT MATTER

H04W 72/12(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXTC, DWPI, ENTXT, 3GPP: 侧行链路共享信道, 频域位置, 起始, 起始频域位置, 侧行链路控制, 指示, 调度, PSSCH, frequency domain location, start, sidelink control, indication, scheduling

### C. DOCUMENTS CONSIDERED TO BE RELEVANT

| Category* | Citation of document, with indication, where appropriate, of the relevant passages | Relevant to claim No. |
| --- | --- | --- |
| X | WO 2022151438 A1 (HUAWEI TECHNOLOGIES CO., LTD.) 21 July 2022 (2022-07-21) description, page 7, lines 5-10, and page 15, lines 10-32 | 1-2, 7, 9-12, 15, 17-20, 25, 27-30, 33, 35-40 |
| A | CN 114223291 A (HUAWEI TECHNOLOGIES CO., LTD.) 22 March 2022 (2022-03-22) entire document | 1-40 |
| A | WO 2020025042 A1 (GUANGDONG OPPO MOBILE TELECOMMUNICATIONS CORP., LTD.) 06 February 2020 (2020-02-06) entire document | 1-40 |
| A | WO 2023274012 A1 (HUAWEI TECHNOLOGIES CO., LTD.) 05 January 2023 (2023-01-05) entire document | 1-40 |

☐ Further documents are listed in the continuation of Box C.       ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **22 March 2024** | **27 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/070294**

| Patent document cited in search report | | | Publication date (day/month/year) | Patent family member(s) | | | Publication date (day/month/year) |
|---|---|---|---|---|---|---|---|
| WO | 2022151438 | A1 | 21 July 2022 | WO | 2022151767 | A1 | 21 July 2022 |
| | | | | CN | 116746096 | A | 12 September 2023 |
| CN | 114223291 | A | 22 March 2022 | WO | 2021031048 | A1 | 25 February 2021 |
| WO | 2020025042 | A1 | 06 February 2020 | TW | 202008828 | A | 16 February 2020 |
| | | | | CN | 112470516 | A | 09 March 2021 |
| WO | 2023274012 | A1 | 05 January 2023 | CN | 115549866 | A | 30 December 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310202767

- CN 202310217499